# EUROPEAN PATENT SPECIFICATION

(11) **EP 1 956 564 B1**
(45) Date of publication and mention of the grant of the patent: **11.09.2013**
(21) Application number: 08000890.7
(22) Date of filing: 08.03.2006
(51) Int. Cl.: G07D 11/00, B41J 2/17

(54) **Check accepting and cash dispensing automated banking machine system and method**
Automatisiertes System und Verfahren zum Annehmen von Schecks und zur Ausgabe von Bargeld an einem Bankautomaten
Système et procédé de machine bancaire d'acception des chèques et de distribution automatique d'argent

(30) Priority: 09.03.2005 US 659994 P; 03.05.2005 US 677805 P; 03.05.2005 US 677804 P; 03.05.2005 US 677846 P; 03.05.2005 US 677767 P; 04.05.2005 US 678091 P; 04.05.2005 US 677891 P; 04.05.2005 US 678102 P; 04.05.2005 US 678094 P
(43) Date of publication of application: 13.08.2008
(62) Divisional of application: 06737499.1
(73) Proprietor: DIEBOLD, INCORPORATED, North Canton, OH 44720 (US)
(72) Inventor: Vankirk, Thomas, A., Wooster Ohio 44691 (US); Washington, Jon, E., Clinton Ohio 44216 (US); Jones, Brian, Navarre Ohio 44662 (US); Beskitt, William, D., Canton Ohio 44709 (US); Graef, Harry, Thomas, Bolivar Ohio 44612 (US); Peters, David, A., Tallmadge Ohio 44278 (US); Blackford, Damon, J., Akron Ohio 44333 (US); Blackson, Dale, H., Canton Ohio 44718 (US); Laskowski, Edward, L., Seven Hills Ohio 44131 (US); Ma, Songtao, Wadsworth Ohio 44281 (US); Crews, Tim, Alliance Ohio 44601 (US); Turocy, Kenneth, Wadsworth Ohio 44281 (US); Dominick, Douglas, T., North Canton Ohio 44720 (US); Smolk, Jasen J., Fairlawn Ohio 44333 (US); Lucas, Brian, E., Clinton Ohio 44216 (US); Lightner, Bradley, Canton Ohio 44707 (US)
(74) Representative: Meldrum, David James

(56) References cited:
- JP-A- 2002 019 131
- US-A1- 2001 012 030
- US-A1- 2004 165 031

## Description

### TECHNICAL FIELD

This invention relates to automated banking machines. Specifically this invention relates to devices and systems which may receive deposits of sheets such as checks and/or other instruments, into an automated banking machine.

### BACKGROUND ART

Automated banking machines are known in the prior art. Automated banking machines are commonly used to carry out transactions such as dispensing cash, checking account balances, paying bills and/or receiving deposits from users. Other types of automated banking machines may be used to purchase tickets, to issue coupons, to present checks, to print scrip and/or to carry out other functions either for a consumer or a service provider. For purposes of this description any device which is used for carrying out transactions involving transfers of value shall be referred to as an automated banking machine.

The disclosure of U.S. Patent No. 6,474,548 issued November 5, 2002 is incorporated herein by reference as though fully rewritten herein.

Thus there exists a need for a deposit accepting apparatus and system for use in connection with automated banking machines that has the capability of handling and imaging more types of items, which may do so more reliably and which can be used in connection with more types of transactions and systems.

US2001/012030 describes a maintenance mechanism for an ink jet.

JP2002 019131 describes an ink jet cleaning mechanism ofplotter.

US2004/165031 describes a liquid ejecting head, method of cleaning the ejecting head, and liquid ejecting device.

### DISCLOSURE OF INVENTION

The invention is set forth in the appended claims.

In one example a deposit accepting apparatus of a cash dispensing ATM operates to accept documents. These documents may include checks, currency bills and/or other types of documents. A single deposit accepting device may accept multiple types of documents. In this example a document such as a check is received through an opening in the housing of the ATM and moved in a transport path therein in a first direction by a first transport. Sensors are operative to sense the document has moved into a suitable location within the device. The document is then disengaged from the first transport and.engaged with a pair of second transports which are disposed from one another in the first direction. The second transports engage the document and are operative to move the document in the transport path a direction transverse of the first direction. The first transport disengages from the document such that the second transports can move the document and align an edge thereof extending along the first direction with a plurality of non-contact sensors. At least one processor operates in accordance with its programming to control the second transports and controls movement of the document in the second direction such that an edge of the document is aligned with the non-contact sensors which serve as a "virtual wall" for purposes of positioning the document.

Once the document is aligned such that an edge extends along the first direction in the desired orientation, the first transport reengages the document while the second transports disengage. The document is then moved again in the first direction past one or more appropriate sensing devices. In this example because the document is aligned along the first direction, documents which are checks may have magnetic indicia such as the micr line or other portion thereof, read through operation of one or more magnetic sensors such as a magnetic read head. Alternatively or in addition when the document is moved in a first direction, the magnetic properties of the document may be read or otherwise sensed in a plurality of locations by one or more magnetic sensors which are operative to read magnetic properties of the document, including indicia thereon such as the micr line and/or other features.

In this example the check is moved in a first direction past a pair of scanning sensors. The scanning sensors are operative to read optical indicia on each side of the check and to produce image data corresponding thereto. The data corresponding to the optical indicia may be processed such that data corresponding to images of the front and rear of the check or portions thereof are generated and stored through operation of the processor in one or more data stores of the ATM. The indicia on the check may also be analyzed for purposes of determining information regarding on the check so that it can be used in conducting a transaction.

In this example once a check has been moved past the sensors which capture data corresponding to optical indicia, the check is moved in generally the first direction into an area which may serve as an escrow area for checks. In some examples the escrow area may be of sufficient length so that multiple checks or other documents may be temporarily stored therein. In this example the machine operates to determine whether the check is to be accepted or returned to the customer while the check is held in the escrow area. For example in some examples one or more processors in the ATM may operate to determine if the check can be sufficiently accurately read, redeemed for cash or otherwise processed while the check is stored in the escrow area. If it is determined that the check cannot be accepted, one or more transports are operative to move the check out of the ATM so that the check is returned to the customer.

Alternatively if the check is found to be suitable for acceptance, the check is moved from the escrow area past one or more stamper printers. The stamper printer is operative to apply ink marks to one or more surfaces of the check so as to indicate that the check has been cancelled or otherwise processed. In one example the check is thereafter moved into a vertically extending transport. As the check enters the vertical transport, printing is conducted on the check through operation of a suitable inkjet or other printer. Appropriate printing is applied to the check to indicate it has been cancelled or otherwise processed as the check moves past the inkjet printer. Of course printing of various indicia may be applied when other types of documents are processed.

In this example the inkjet printer has aligned on an opposed side of the transport therefrom, an ink catcher mechanism. The ink catcher mechanism of this example includes a movable head. The movable head includes an opening therein such that the opening may be aligned with the ink spraying nozzles on the head of the inkjet printer so as to receive ink therein that is not deposited on the check or other document. This example of the movable head also includes a wiper. The head is moved through operation of a motor or other moving device at appropriate times so that the wiper engages the head of the inkjet printer so as to minimize the buildup of ink and contaminants thereon. This facilitates accurate printing and helps to minimize the risk of potential damage to checks by the accumulation of excess ink within the machine.

Checks or other documents that move nast the printer in the vertical transport are moved downward in this example into a storage area. Once the documents have moved adjacent a lower surface of the storage area a transversely movable plunger mechanism is operative to engage the check and move it out of the vertical transport. In this example the plunger mechanism is operative to be movable such that the check can be either moved into a storage location on either transverse side of the vertical transport. Once the check is moved out of the transport by the plunger mechanism the check or other document may be held in intermediate relation between a pair of wall surfaces and a spring biased backing plate. As a result checks or other documents maybe selectively moved by the plunger mechanism for storage in a selected one of the locations in the storage area.

Various approaches may be taken in the operation of automated banking machines for storing documents that are received by the document accepting mechanism. For example in some examples the mechanism may only accept checks. In such examples the machine may operate in accordance with its programming to segregate checks that are drawn on the particular institution owning the ATM that receives the check, from checks that are drawn on other institutions. Alternatively the ATM may be programmed to store valid checks in one compartment and suspect checks in another compartment. Alternatively in some other examples the document accepting mechanism may store multiple types of documents. For example in an ATM that accepts currency bills and checks through the mechanism, bills may be stored in one compartment while checks are stored in another. Various approaches may be taken based on the programming of the particular automated banking machine.

Numerous types of novel systems and methods are taught by the disclosure hereof

### BRIEF DESCRIPTION OF DRAWINGS

Figure 1 is an isometric view of an exemplary deposit accepting apparatus shown in an open condition for servicing.
Figure 2 is an opposite hand isometric view of the deposit accepting apparatus shown in Figure 1.
Figure 3 is a schematic view of the devices included in the deposit accepting apparatus.
Figure 4 is a top isometric view of a portion of an upper platen including elements of a first transport which moves documents in a first longitudinal direction in the deposit accepting apparatus and second transports which move documents in a direction transverse to the first direction.
Figure 5 is a side view of the platen and first and second drives shown in Figure 84.
Figure 6 is a bottom view corresponding to Figures 4 and 5 showing the platen with rolls of the first and second transports extending therethrough.
Figure 7 is a top plan view of an upper platen and a lower platen of a transport mechanism of the exemplary deposit accepting apparatus.
Figure 8 is a front view showing the positions of the first and second transports corresponding to Figure 7.
Figure 9 is a view similar to Figure 7 with the transports operating to move a document in a first direction.
Figure 10 is a front view of the first and second transports corresponding to Figure 9.
Figure 11 is a view similar to Figure 9 with the document moved further into the deposit accepting apparatus.
Figure 12 is a front plan view showing the positions of the first and second transports.
Figure 13 is a view similar to Figure 11 showing the document moved in a second direction transverse to the first direction.
Figure 14 is a front plan view showing the relative positions of the and second transports when a document is moved in a transverse direction.
Figure 15 is a view similar to Figure 13 showing an edge of the document aligned with the non-contact sensors.
Figure 16 corresponds to Figure 15 and shows the positions of the first and second transports.
Figure 17 is a view similar to Figure 15 but showing an alternative document including a folded edge.
Figure 18 is a front view of the first and second transports corresponding to Figure 17.
Figure 19 is an isometric view showing the movable mounting of the exemplary magnetic read head of the embodiment.
Figure 20 is a partially sectioned view corresponding to Figure 19 further showing the movable mounting for the magnetic read head.
Figure 21 is a cross-sectional side view of the mounting for the magnetic read head as shown in Figure 19.
Figure 22 is an isometric view showing an ink catcher mechanism of an exemplary embodiment.
Figure 23 is a partially exploded view showing the movable head disposed from the body of the ink catcher.
Figure 24 is an exploded isometric view showing the body of the ink catcher of Figure 22.
Figure 25 is a partially exploded view of an exemplary form of the stamper printer used in the exemplary embodiment.
Figure 26 is another exploded view of the exemplary stamper printer.
Figure 27 is a side view showing the eccentric profile of the exemplary embodiment of the printing roll of the stamper printer.
Figure 28 is an isometric view of the storage compartment of the alternative deposit accepting mechanism shown with the storage compartment having its access door in an open position.
Figure 29 is an isometric view of the guide of the vertically extending transport that extends in the storage area.
Figure 30 is a side view of the vertically extending transport that extends in the storage area of the exemplary deposit accepting apparatus.
Figure 31 is an isometric view of the apparatus shown accepting a document into the vertically extending transport.
Figures 32 through 35 show the sequential movement of an exemplary plunger member as it operates to move a document held in the vertically extending transport into a storage location positioned on the left side of the storage mechanism as shown.
Figure 36 is an isometric view similar to Figure 31 showing the vertical transport of the accepting a document therein.
Figures 37 through 40 show the sequential movement of the exemplary plunger member to move a document in the vertical transport to a storage location on the right side of the vertical transport as shown.
Figure 41 is a perspective view of an embodiment of an automated banking machine.
Figure 42 is a schematic view of an embodiment of an automated banking machine.

### BEST MODES FOR CARRYING OUT INVENTION

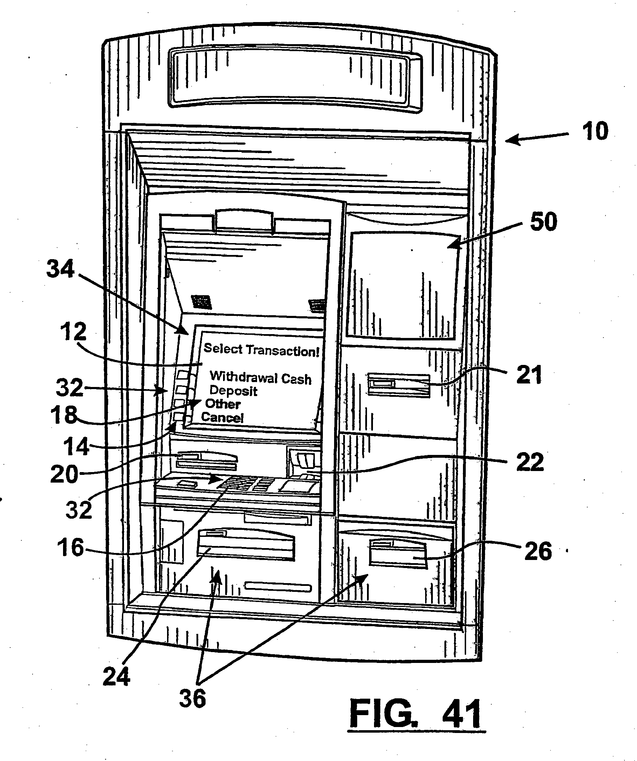

Referring now to the drawings and particularly to Figure 41, there is shown therein a perspective view of an exemplary embodiment of automated banking machine 10. Here the automated banking machine 10 may include a user interface 50 that includes at least one output device 34 such as a display device 12. The display device 12 may be operative to provide a consumer with a user interface output 18 that may include a plurality of screens or other outputs including selectable options for operating the machine. The exemplary embodiment may further include other types of output devices such as a receipt printer 20, speakers, or any other type of device that is capable of outputting visual, audible, or other sensory perceptible information.

The user interface of the automated banking machine may also include a plurality of input devices 32 such as an encrypting pin pad with keypad 16 and function keys 14 as well as a card reader 22. The exemplary embodiment may further include or use other types of input devices, such as a touch screen, microphone, or any other device that is operative to provide the machine with inputs representative of user instructions or information. The machine may also include one or more biometric input devices such as a fingerprint scanner, an iris scanner, facial recognition device, hand scanner, or any other biometric reading device which may be used to read a biometric input that can be used to identify a user.

The exemplary embodiment of the automated banking machine 10 may further include a plurality of transaction function devices which may include for example a cash dispenser 24 and a deposit accepting device 26, or any other type of device which is operative to perform transaction functions involving transfers of value.

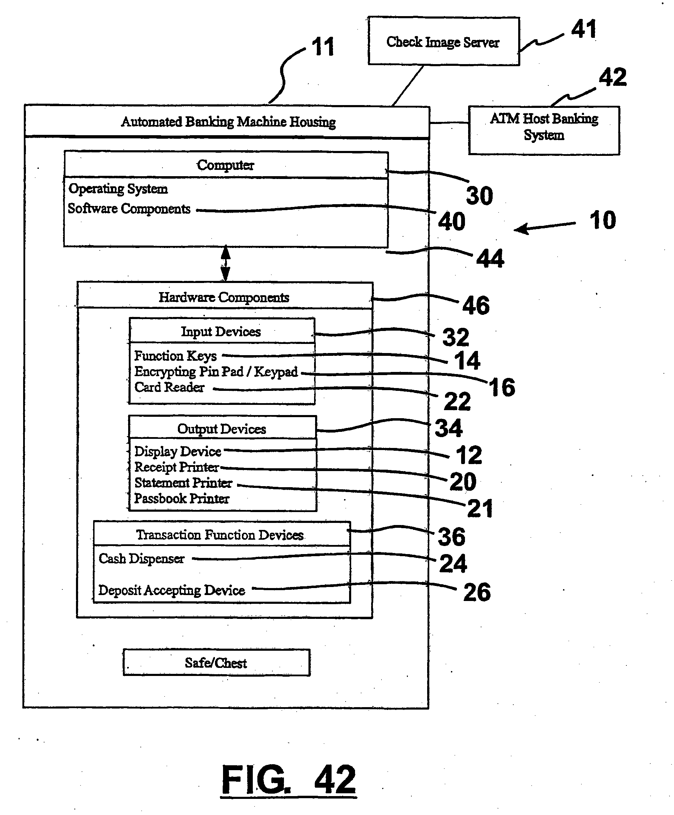

Figure 42 shows a schematic view of components which may be included in a housing 11 of the automated banking machine 10. The machine 10 may include at least one terminal processor or computer 30. The computer 30 may be in operative connection with the input device(s) 32, the output device(s) 34, and the transaction function device(s) 36. The exemplary, embodiment may further include at least one terminal control software component 40 operative in the computer 30. The terminal control software components may be operative to control the operation of the machine by both a consumer and an authorized user such as a service technician. For example such terminal control software components may include applications which enable a consumer to dispense cash, deposit a check, or perform other transaction functions with the machine. In addition the terminal control software components may include applications which enable a service technician to perform configuration, maintenance, and diagnostic functions with the machine.

Exemplary embodiments of the automated banking machine 10 are operative to communicate with a remote computer such as a transaction processing server which is referred to herein as an ATM host banking system 42. Such an ATM host banking system 42 is operative to authorize the automated banking machine 10 to perform transaction functions for users such as withdrawing cash from an account through operation of the cash dispenser 24, depositing checks or other items with the deposit accepting device 26, performing a balance inquiry for a financial account and transferring value between accounts. For example, the computer 30 may be operative to cause the cash dispenser to operate responsive to at least one communication received by the machine from the ATM host banking system.

Exemplary embodiments of the automated banking machine 10 are also operative to communicate with a remote computer such as an document image server 41. A document image server may correspond to a check image server that is operative to receive images of checks or other items scanned by a deposit accepting device of the ATM. For example, the deposit accepting device may include at least one optical scanning sensor operative to scan one or both faces of a check and produce one or more color, grayscale and/or black and white images of the faces of the check. The computer may then cause the machine to send data corresponding to the scanned images to the check image server.

In exemplary embodiments, the ATM host banking system 42 and check image server 41 may correspond to two separate servers. However, in alternative embodiments the host banking system 42 and check image server 41 may correspond to a common remote computer.

The incorporated disclosure of U.S. Patent No. 6,474,548 discloses a deposit accepting device of a cash dispensing ATM. For purposes of this disclosure a deposit accepting device shall be construed to encompass any apparatus which senses indicia on documents input to an automated banking machine.

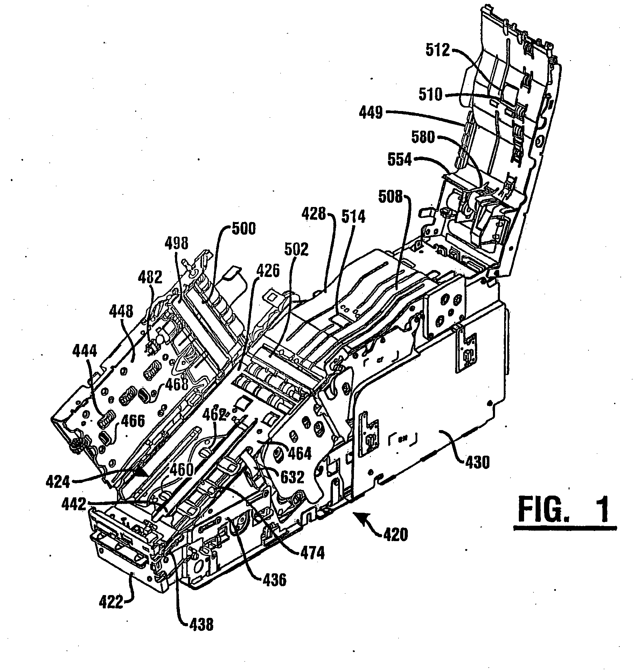

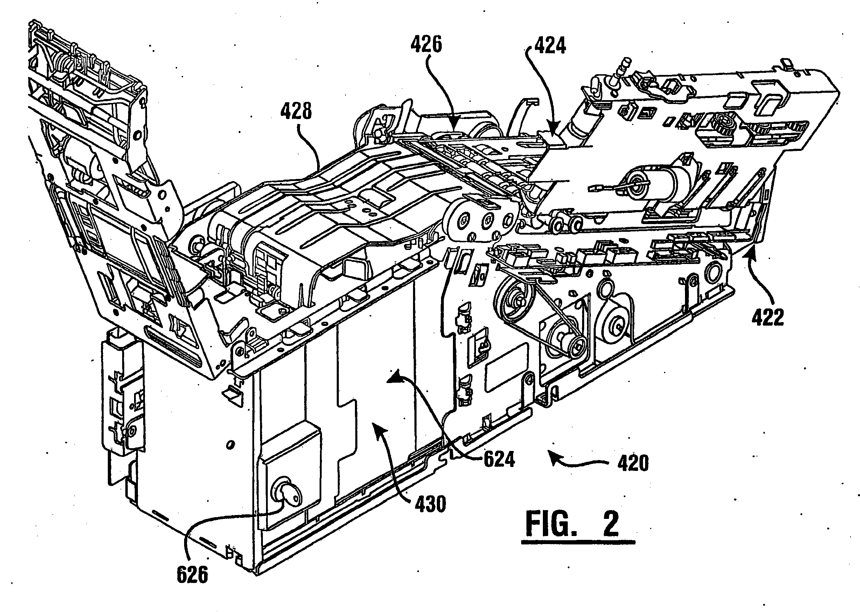

A deposit accepting device 420 of an exemplary embodiment and having the features described hereafter is shown in Figure 1. The deposit accepting device is shown with the mechanism open so as to enable more readily describing its components. The deposit accepting mechanism would be open in the manner shown in Figures 1 and 2 only when the device is not in operation. Rather the device would be placed in the open condition for servicing activities such as clearing jams, cleaning, adjusting or replacing component. This can be readily done in this exemplary embodiment by a servicer as later described.

The deposit accepting device includes a document inlet opening 422. In the exemplary embodiment during operation the inlet opening is in communication with the outside of the housing of the automated banking machine. Documents received through the inlet opening travel along a transport path in the device. The transport path in the device further includes a document alignment area 424 in which documents are aligned to facilitate the processing thereof. The exemplary form of the unit further includes a document analysis area 426. The exemplary document analysis area includes canning sensors and magnetic sensors for purposes of reading indicia from the documents.

The exemplary form of the device further includes an escrow area 428 along the transport path. In the escrow area documents that have been received are stored pending determination to either accept the documents or return them to the user. The exemplary deposit accepting device further includes a storage area 430 which operates to store documents that have been accepted for deposit within the deposit accepting device. Of course it should be understood that this structure is exemplary of arrangements that may be used.

In the exemplary embodiment documents are received through the opening and the presence of a document is sensed by at least one sensor 432. Sensing a document at the opening at an appropriate time during ATM operation (such as at a time when a user indicates through an input device of the machine that they wish to input a document) causes at least one processor to operate so as to control a gate 434. The processor operates upon sensing the document to cause the gate to move from the closed position to the open position. This is accomplished in the exemplary embodiment by a drive moving an actuator member 436 as shown in Figure 1. The actuator member 436 includes a cam slot 438 which causes corresponding movement of the gate 434 to the desired position. In some embodiments the at least one sensor 432 or other sensor in the device is operative to sense properties that would indicate whether the document being inserted is a double or other multiple document. At least one processor in the ATM may operate in accordance with its programming to not accept multiple documents and to cause the ATM to provide at least one output to advise the user to insert a single document.

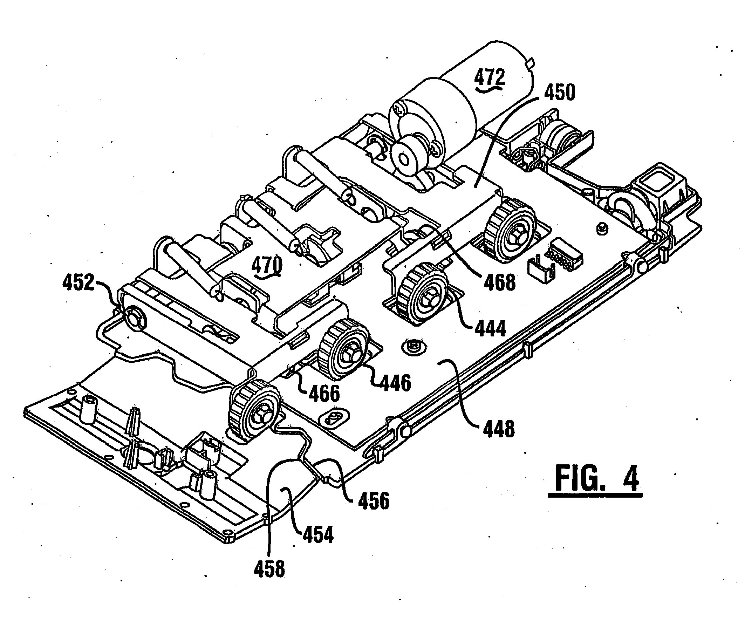

Responsive to the sensing of the document and other conditions as determined by at least one processor, a first transport 440 operates to move the document into the document alignment area. In the exemplary embodiment the document is moved in engaged relation between a belt flight 442 and rollers 444. As best shown in Figures 1 and 4, rollers 444 extend in opening 446 in an upper platen 448 to engage or at least move in very close proximity to belt flight 442. As shown in Figure 4, rollers 444 are mounted on a movable carriage 450. Carriage 450 is movable rotationally about a shaft 452. Movement of the carriage 450 enables selectively positioning of the rollers 444 to be in proximity to the surface of belt flight 442 or to be disposed away therefrom for reasons that are later discussed. After the document is sensed as having moved into the device the processor operates to cause the gate to be closed. Alternatively if a user has provided inputs through input devices on the machine indicating that they will be depositing more documents in the machine, the gate may remain open until the last document is deposited.

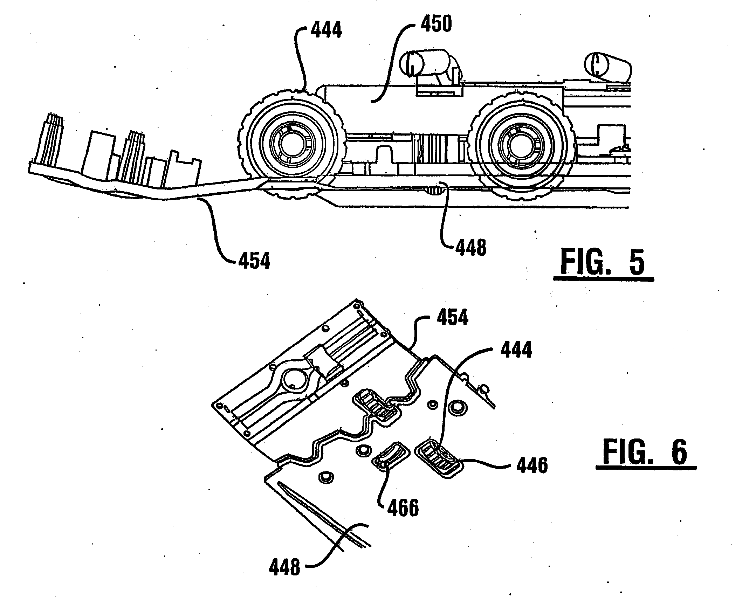

As shown in Figure 4 through 6, platen 448 in the operative position is in adjacent relation with a lead in guide 454. Guide portion 454 and platen 448 include corresponding contoured edges 456, 458. The contoured edges of the exemplary embodiment are of a toothed contoured configuration. This configuration is used in the exemplary embodiment to reduce the risk that documents will become caught at the adjacent edges of the platen and the guide. The toothed contoured configuration of the adjacent surfaces helps to minimize the risk that documents catch or are folded or damaged as they pass the adjacent surfaces. Of course it should be understood that this approach is exemplary and in other embodiments other approaches may be used.

In the exemplary embodiment the document alignment area includes transverse transport rolls 460 and 462. The transverse transport rolls extend through apertures in the platen 464 that supports belt flight 442. The transverse transport rolls of the exemplary embodiment are configured to have axially tapered surfaces extending in each longitudinal direction from the radially outermost extending portion of the roll so as to minimize the risks of documents being caught by a surface thereof. In alternative embodiments transverse transport rolls may have simple or compound curved surfaces to minimize the risk of catching transversely moving documents, which configurations shall also be referred to as tapered for purposes of this disclosure. In the exemplary embodiment the upper surface of the transverse transport rolls are generally at about the same level as the upper surface of belt flight 442. In addition each of the transverse transport rolls are in operative connection with a drive device. The drive device of the exemplary embodiment enables the transverse transport rolls to move independently for purposes of aligning documents as later discussed.

In supporting connection with platen 448 are a pair of transverse follower rolls 466 and 468. The transverse follower rolls each extend in a corresponding opening in the platen 448. Transverse follower roll 466 generally corresponds to the position of transverse transport roll 460. Likewise transverse follower roll 468 corresponds to the position of transverse transportroll 462. As shown in Figure 4, rolls 466 and 468 are supported on a movable carriage 470. Carriage 470 is rotatably movable about shaft 452. A drive 472 is selectively operative responsive to operation of one or more processors in the banking machine to cause the movement of carriage 470 and carriage 450. As a result, drive 472 of the exemplary embodiment is selectively operative to dispose rollers 444 adjacent to belt flight 442 or dispose the rollers therefrom. Likewise drive 472 is selectively operative to place transverse follower rolls 466 and 468 in adjacent relation with transverse transport rolls 460 and 462. These features are useful for purposes of aligning documents as will be later discussed. Of course this approach to a transverse transport for documents is exemplary and in other embodiments other approaches may be used.

The document alignment area 424 further includes a plurality of alignment sensors 474. In the exemplary embodiment non-contact sensors are used, which can sense the document without having to have any portion of the sensor contact the document. The exemplary alignment area includes three alignment sensors that are disposed from one another along the transport direction of belt flight 442. In the exemplary embodiment one sensor is aligned transversely with each of rolls 460 and 462 and a third sensor is positioned intermediate of the other two sensors. The alignment sensors of the exemplary embodiment are radiation type and include an emitter and a receiver. The sensors sense the documents that move adjacent thereto by detecting the level of radiation from the emitter that reaches the receiver. It should be understood that although three alignment sensors are used in the exemplary embodiment, other embodiments may include greater or lesser numbers of such sensors. Further while the alignment sensors are aligned along the direction of document transport in the exemplary embodiment, in other embodiments other sensor arrangements may be used such as a matrix of sensors, a plurality of transversely disposed sensors or other suitable arrangement.

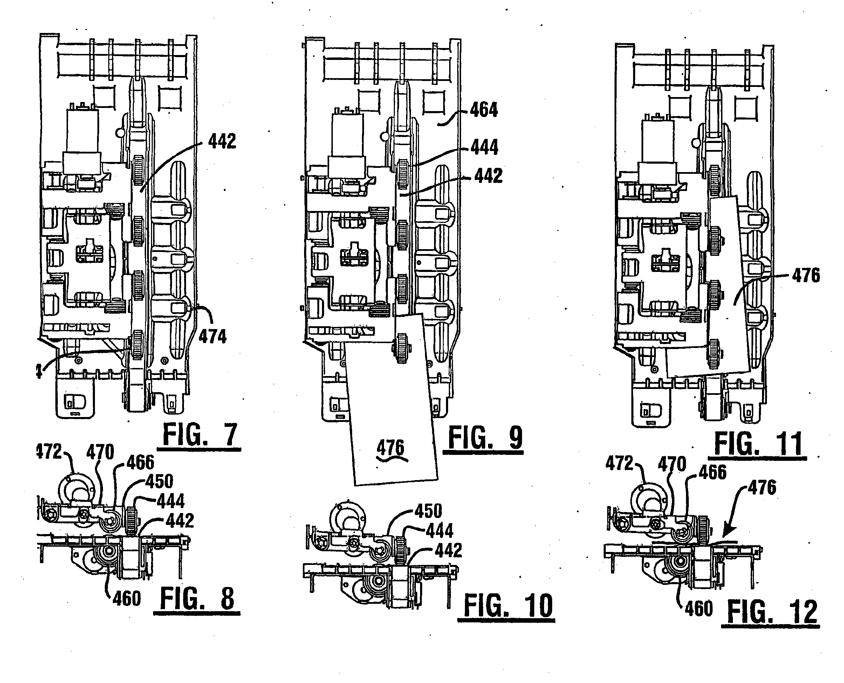

The operation of the document alignment area will now be described with reference to Figures 8 through 18. In the exemplary embodiment when a document is sensed entering the device, carriage 450 which is controlled through the drive 472 is positioned such that rollers 444 are positioned in adjacent relation to belt flight 442. This position is shown in Figure 8. In this document receiving position carriage 470 is moved such that the transverse follower rolls 466 and 468 are disposed away from the transverse transport rolls 460 and 462.

In response to sensing a document 476 being positioned in the inlet opening 422 and other appropriate conditions, the at least one processor is operative to cause the first transport 440 to move belt flight 442. If a double or other multiple document is sensed the first transport may not run or may run and then return the document to the user as previously discussed. Moving belt flight 442 inward causes the first document to be moved and engaged with the transport in sandwiched position between the rollers 444 and the belt flight as shown in Figure 9. In this position the transverse transport and transverse follower rolls are disposed away from one another so that the document 476 can move in engagement with the first transport into the document alignment area. The tapered surfaces of the transverse transport rolls 460,462 facilitate the document moving past the rolls without snagging. It should also be noted that projections on the surface of platen 464 operate to help to move the document by minimizing the risk of the document snagging on various component features. Further the projections on the platen help to minimize the effects of surface tension that might otherwise resist document movement and/or cause damage to the document. Of course these approaches are exemplary, and other embodiments may employ other approaches.

Position sensors for documents are included in the document alignment area and such sensors are operative to sense when the document has moved sufficiently into the document alignment area so that the document can be aligned. Such sensors may be of the radiation type or other suitable types. When the document 476 has moved sufficiently inward, the first transport is stopped. In the stopped position of the transport, the drive 472 operates to move carriage 470 as shown in Figure 12. This causes the transverse transport and follower rolls to move adjacent with the document 476 positioned therebetween so as to engage the document.

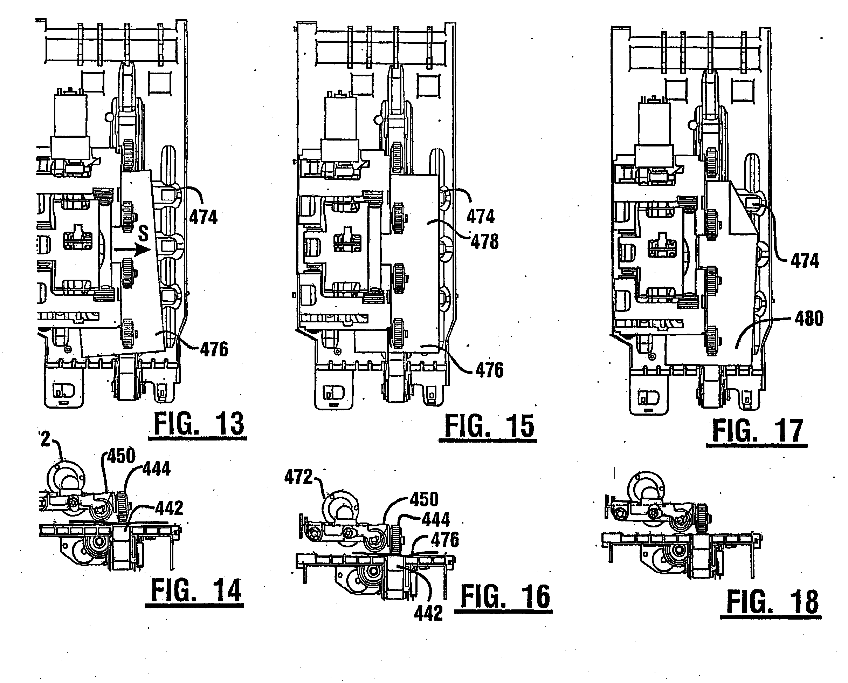

Thereafter as shown in Figures 13 and 14 the drive 472 is operative to move the carriage 450. This causes the rollers 444 to be disposed from belt flight 442 which disengages this transport with respect to the document. Thereafter the one or more drives which are operative to move the transverse transport rolls, operate responsive to at least one processor so as to move document 476 in a direction transverse to the direction of prior movement by belt flight 442 as well as to deskew the document. As shown in Figure 15, the document 476 is moved sideways until a longitudinal edge 478 is aligned with the alignment sensors 474. In the exemplary embodiment the alignment sensors 474 provide a virtual wall against which to align the longitudinal edge of the document. The sensing of the document by the alignment sensors 474 enables precise positioning of the document and aligning it in a desired position which facilitates later reading indicia therefrom. In an exemplary embodiment in which the documents are checks, the precise alignment of the longitudinal edge enables positioning of the document and its micr line thereon so as to be in position to be read by a read head as later discussed. Of course in other embodiments other approaches may be used.

In some exemplary embodiments the alignment sensors are in operative connection with one or more processors so that the transports are controlled responsive to the sensors sensing a degree of reduction in radiation at a receiver from an associated emitter of a sensor as the document moves toward a blocking position relative to the sensor. The exemplary embodiment may be configured such that a drive operating the transverse transport roll may cease to further move the sheet transversely when the alignment sensor which is transversely aligned with the transport roll senses a certain reduction in the amount of radiation reaching the sensor from the emitter. Thereafter the other drive operating the other transverse transport roll may continue to operate until the alignment sensor that corresponds to that transport roll senses a similar degree of reduction. In this way the processor operating the independently controlled transverse transport rolls cause the longitudinal edge of the document to be aligned with the virtual wall produced through use of the sensors.

In alternative embodiments the apparatus may operate in accordance with its programming to cause the respective transverse transport rolls to move the document transversely such that a reduction in radiation from the respective emitter is sensed reaching the corresponding receiver until no further reduction occurs. This corresponds to a condition where the document fully covers the corresponding receiver. Thereafter the respective drive for the transverse transport roll may be reversed in direction to a desired level such as, for example, fifty percent of the total reduction which would indicate that the transverse edge is positioned to cover approximately fifty percent of the receiver. In this way this alternative embodiment may be able to align documents that have relatively high radiation transmissivity or transmissivity that is variable depending on the area of the document being sensed by the sensor. Alternatively a transverse linear array of sensors, such as CCDs may be used to determine the transverse position of a particular portion of the edge of the sheet. A plurality of spaced arrays may be used to sense the position of the sheet. Of course these approaches are exemplary and in other embodiments other approaches may be used.

Once the document has been aligned and moved to the position shown in Figure 15, the drive 472 operates to move the carriage 450 such that the rollers 444 are again moved adjacent to belt flight 442. Thereafter the drive moves the carriage 470 so as to dispose the transverse follower rolls 466 and 468 away from the transverse transport rolls. This position is shown in Figure 8. Thereafter the now aligned document can be further moved along the transport path through movement of the first transport out of the document alignment area of the device to the document analysis area.

Figures 17 and 18 disclose an operational feature of the exemplary, embodiment where a document 480 has a folded edge. In this exemplary situation the folded edge is configured so that the alignment sensor 474 which corresponds to transverse transport roll 462 cannot sense a longitudinal edge of the document until the document is unduly skewed. However, in this situation the middle alignment sensor will be operative to sense the middle portion of the longitudinal edge as will the alignment sensor that corresponds to transverse transport roll 460 before sensor 474 senses the edge of the document. In the exemplary embodiment the at least one processor that controls the operation of the drive for the transverse transport rolls is operative to control movement of the document transversely when the middle alignment sensor senses the edge of the document even through one of the end sensors has not. This is true even for a folded document or a document that has been torn. The at least one processor controls each transverse roll to move the document transversely until two of the three sensors detect and edge of the document in the desired aligned position. In this way even such an irregular document is generally accurately aligned in the longitudinal direction from the transport.

It should be understood that the exemplary embodiment users radiation type sensors for purposes of aligning the document in the alignment section. In other embodiments other types of sensors such as sonic sensors, inductance sensors, air pressure sensors or other suitable sensors or combinations thereof, may be used.

Once the document has been aligned in the document alignment area of the transport path, the deposit accepting device operates responsive to the programming associated with one or more processors, to cause the document to be moved along the transport path by the first transport into the document analysis area. In the exemplary embodiment the document analysis area includes at least one magnetic sensing device which comprises the magnetic read head 482. Magnetic read head 482 is in supporting connection with platen 448 and in the exemplary embodiment is movable relative thereto. The alignment of the document in the document alignment area is operative in the exemplary embodiment to place the micr line on the check in corresponding relation with the magnetic read head. Thus as the document is moved by the first transport into the document analysis area, the micr line data can be read by the magnetic read head. Of course in some alternative embodiments micr or other magnetic indicia may be read through other magnetic sensing elements such as the type later discussed, or optically, in the manner shown in U.S. Patent No. 6,474,548, for example.

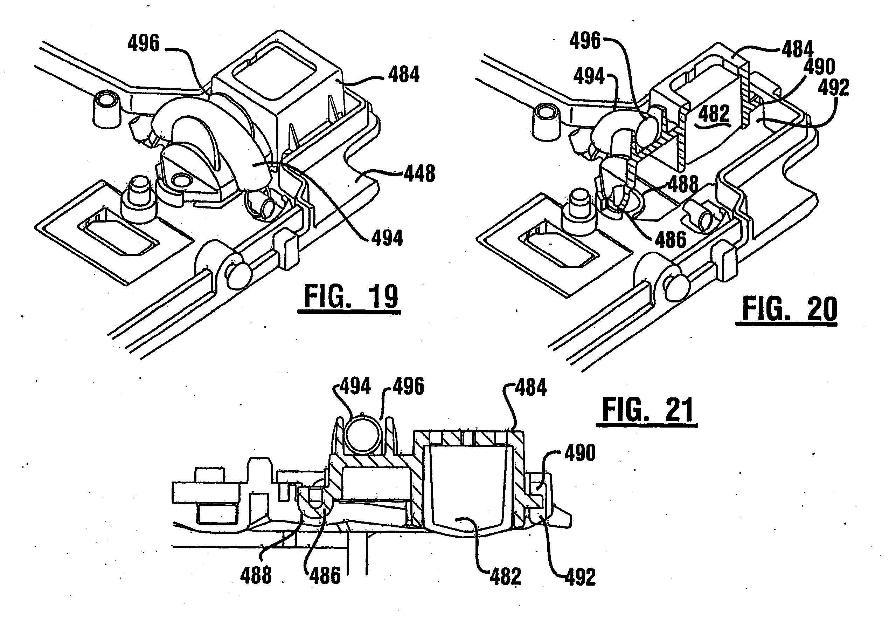

Figures 19 through 21 show an exemplary form of the movable mounting for the magnetic read head 482. In the exemplary embodiment the magnetic read head is positioned in a retainer 484. Retainer 484 includes a first projection 486 that extends in and is movable in an aperture 488. Retainer 484 also includes a projection 490 which is movable in an aperture 492. A tension spring 494 extends through a saddle area 496 of the housing 484. The saddle area includes two projections which accept the spring 494 therebetween. This exemplary mounting for the magnetic read head provides for the head to float such that it can maintain engagement with documents that are moved adjacent thereto. However, the movable character of the mounting which provides both for angular and vertical movement of the read head reduces risk of snagging documents as the documents move past the read head. Further the biased spring mounting is readily disengaged and enables readily replacing the magnetic read head in situations where that is required. Of course this approach is exemplary and in other embodiments other approaches may be used.

The exemplary document analysis area includes in addition to the read head a magnetic sensing element 498. The magnetic sensing element in some exemplary embodiments may read magnetic features across the document as the document is moved in the document analysis area. In some embodiments the magnetic reading device may be operative to read numerous magnetic features or lines so as to facilitate the magnetic profile of the document as discussed herein. In some embodiments the magnetic sensing element may sense areas of the document in discrete elements which provide a relatively complete magnetic profile of the document or portions thereof. In some embodiments the magnetic sensing capabilities may be sufficient so that a separate dedicated read head for reading the micr line of checks is not required. Of course these approaches are exemplary and may vary depending on the type of documents which are being analyzed through the system.

The exemplary document analysis area further includes a first scanning sensor 500 and a second scanning sensor 502. The scanning sensors are operative to sense optical indicia on opposed sides of the document. The scanning sensors in combination with at least one processor are operative to produce data which corresponds to a visual image of each side of the document. This enables analysis of visual indicia on documents through operation of at least one processor in the ATM. In the case of checks and other instruments the scanning sensors also enable capturing data so as to produce data which corresponds to image of a check which may be used for processing an image as a substitute check, and/or other functions.

In some embodiments, the data corresponding to images of the documents may be used by the ATM to provide outputs to a user. For example, an image of a check may be output through a display screen of the ATM so a user may be assured that the ATM has captured the image data. In some cases at least one processor in the ATM may apply digital watermarks or other features in the data to minimize the risk of tampering. In some embodiments at least one processor may operate in accordance with its programming to indicate through visual outputs to a user with the image that security features have been applied to the image data. This may include outputs in the form of words and/or symbols which indicate a security feature has been applied. This helps to assure a user that the ATM operates in a secure manner in processing the accepted check. Of course, this approach is exemplary of things that may be done in some embodiments.

In alternative embodiments the programming of one or more processors associated with the ATM may enable the scanning sensors, magnetic sensors and other sensing elements to gather data which is usable to analyze other types of documents. Other types of sensing elements may include, for example, UV, IR, RFID, fluorescence, RF and other sensors that are capable of sensing properties associated with document. Documents may include for example receipts, certificates, currency, vouchers, travelers checks, tickets or other document types. The data gathered from the sensors in the analysis area may be processed for purposes of determiniag the genuineness of such items and/or the type and character thereof. Of course the nature of the sensors included in the analysis area may vary depending on the type of documents to be processed by the device. Also some embodiments may operate so that if a micr line or other magnetic characters on the document are not aligned with the magnetic read head, the document can nonetheless be analyzed and processed using data from other sensors.

It should also be noted that documents are moved in the document analysis area through engagement with a plurality of driving rolls 504. The driving rolls 504 operate in response to one or more drives that are controlled responsive to operation of one or more processors in the ATM. The drives are operative to move documents into proximity with and past the sensors so as to facilitate the reading of indicia thereon. The document may be moved in one or more directions to facilitate the reading and analysis thereof.

Once a document has been moved through the document analysis area, the document passes along the transport path into escrow area 428. Escrow area 428 includes a third transport 506. Transport 506 includes an upper belt flight 508. The plurality of cooperating rollers 510 supported through platen 449 are positioned adjacent to belt flight 508 in the operative position. Documents entering the escrow area are moved in engagement with belt flight 508 and intermediate to belt flight and the rolled.

In the exemplary embodiment documents that have been passed through the document analysis area are moved in the escrow area where the documents may be stopped for a period of time during which decisions are made concerning whether to accept the document. This may include for example, making a determination through operation of the ATM or other connected systems concerning whether to accept an input check. If it is determined that the check should not be accepted, the direction of the transports are reversed and the check is moved from the escrow area through the document analysis area, the document alignment area and back out of the ATM to the user. Alternatively if the decision is made to accept the document into the ATM, the document is moved in a manner later discussed from the escrow area to the document storage area of the device.

In some exemplary embodiments the-escrow area may be sufficiently large to hold several checks or other documents therein, In this way a user who is conducting a transaction involving numerous checks may have all those checks accepted in the machine, but the programming of the machine may enable readily returning all those checks if the user elects to do so or if any one or more of the documents is determined to be unacceptable to the machine. Alternatively or in addition, storage devices such as belt storage mechanisms, transports or other escrow devices may be incorporated into the transport path of a deposit accepting device so that more numerous documents may be stored therein and returned to the user in the event that a transaction is not authorized to proceed. Of course these approaches are exemplary.

It should be noted that the exemplary escrow area includes a lower platen with a plurality of longitudinal projections which extend thereon. The longitudinal projections facilitate movement of the document and reduce surface tension so as to reduce the risk of the document being damaged.

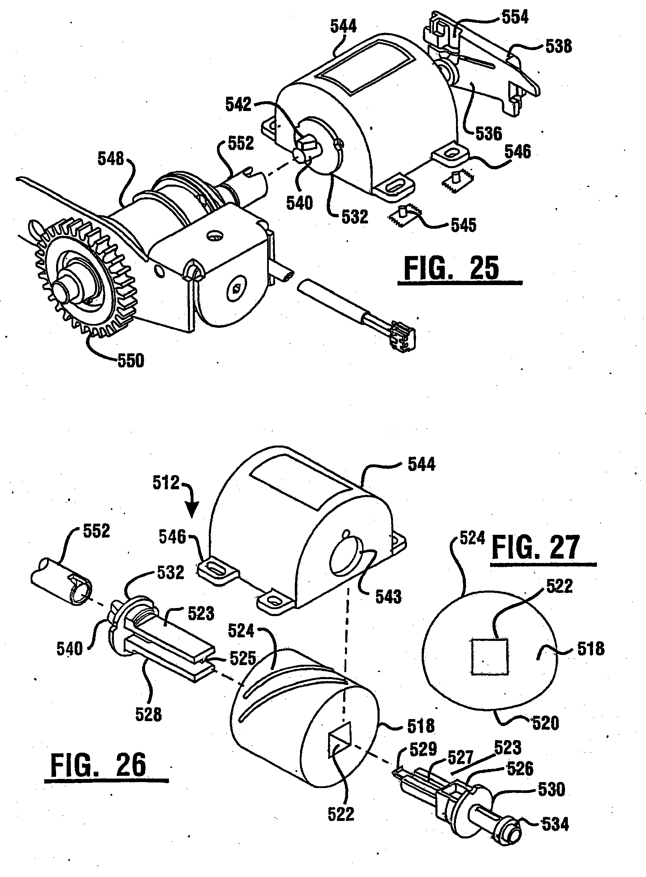

In the exemplary embodiment the escrow area further includes a stamper printer 512. In the exemplary embodiment the stamper printer is supported through platen 449 and includes an ink roll type printer which is described in more detail in Figures 25 through 27. The escrow area further includes a backing roll 514 which operates to assure that documents move in proximity to the stamper printer so that indicia can be printed thereon.

The exemplary form of the stamper printer is shown in greater detail in Figures 25 through 27. The exemplary printer includes an eccentric ink bearing roll 518 shown in Figure 27. The eccentric shape of the ink bearing roll in cross section includes a flattened area 520 which is disposed radially closer to a rectangular opening 522 which extends in the roll, than a printing area 524 which is angularly disposed and in opposed relation thereof. The flattened area is generally positioned adjacent to documents when documents are moved through the escrow area and printing is not to be conducted thereon by the stamper printer. In the exemplary embodiment the ink roll 518 is encapsulated in plastic and is bounded by a plastic coating or cover about its circumference. Apertures or openings are cut therethrough in the desired design that is to be printed on the documents. As can be appreciated, the apertures which are cut in the plastic which encapsulates the outer surface of the ink bearing roll enables the ink to be transferred from the ink holding roll maternal underlying the plastic coating, to documents in the shape of the apertures. For example in the embodiment shown a pair of angled lines are printed on documents by the stamper printer. Of course this approach is exemplary and in other embodiments other types of inking mechanism and/or designs may be used.

In the exemplary embodiment the ink roll 518 is supported on a first shaft portion 526 and a second shaft portion 528. The shaft portions include rectangular projections that are generally rectangular in profile 523, that extend in the opening 522 of the ink roll. The shaft portions include flanged portions 530 and 532 that are disposed from the radial edges of the roll. Shaft portions 526 and 528 include an interengaging projection 525 and access 527, as well as a tab 529 and recess that engage and serve as a catch, which are operative to engage and be held together so as to support the roll.

Shaft portion 526 includes an annular projection 534. Annular projection 534 is adapted to engage in a recess which is alternatively referred to as a slot (not separately shown) which extends generally vertically in a biasing tab 536 as shown in Figure 25. Biasing tab 536 is operative to accept the projection in nested relation and is operative to provide an axial biasing force against shaft portion 526 when the first shaft portion is positioned therein. This arrangement enables holding the shaft portion in engaged relation with the biasing tab. However, when it is desired to change the stamper printer and/or the ink roll therein, the biasing tab may be moved such that the annular projection may be removed from the interengaging slot by moving the projection 534 upward in the recess so as to facilitate removal of the printer and ink roll. The biasing tab is supported on a bracket 538 that is in supporting connection with the platen which overlies the escrow area.

Second shaft portion 528 includes an annular projection 540. Projection 540 includes on the periphery thereof an angled radially outward extending projection 542. Projection 542 has a particular contour which is angled such that the transverse width of the projection increases with proximity to the flange portion 542. This configuration is helpful in providing a secure method for moving the ink roll but also facilitates changing the ink roll and stamper printer when desired.

In the exemplary embodiment the ink roll 518 is housed within a housing 544. Housing 544 is open at the underside thereof such that the printing area 524 can extend therefrom to engage a document from the escrow area. Housing 544 also includes two pairs of outward extending ears 546. Ears 546 include apertures therein that accept housing positioning projections 545 on the associated mounting surface of the device and are operative to more precisely position the housing and the ink roll on the supporting platen and to facilitate proper positioning when a new ink roll assembly is installed. Housing 544 also includes apertures 543 through which the shaft portions extend. A flange portion is positioned adjacent to each aperture.

In the exemplary embodiment shaft portion 528 is driven through a clutch mechanism 548. Clutch mechanism 548 of the exemplary embodiment is a wrap spring clutch type mechanism which is selectively actuatable through electrical signals. The clutch is driven from a drive through a gear 550. The clutch 548 outputs rotational movement through a coupling 552. Coupling 552 includes the annular recess that corresponds to projection 540 and a radial recess which corresponds in shape to projection 542. Thus in the exemplary embodiment the force of the biasing tab enables the coupling 552 to solidly engage shaft portion 528.

During operation gear 550 which is operatively connected to a drive provides a mechanical input to the clutch 548. However, the ink roll generally does not rotate. Transport 506 is operative to move a document in the transport in the escrow area responsive to signals from a processor. Sensors such as radiation sensors in the escrow area are operative to indicate one or more positions of the document to the processor. When the document is to be marked with the stamper printer it is positioned adjacent to the ink roll by operation of a processor controlling the transport in the escrow area. A signal is sent responsive to the processor to the clutch 548. This signal is operative to engage the coupling 552 which causes the shaft portions 528 and 526 to rotate the ink roll 518. As the ink roll rotates the printing area 524 engages the surface of the document causing ink markings to be placed thereon. The ink roll rotates in coordination with movement of the document. The clutch is operative to cause the coupling to carry out one rotation such that after the document has been marked, the printing area is again disposed upward within the housing. The flattened portion 520 of the ink roll is again disposed in its initial position facing the document. Thus documents are enabled to pass the stamper printer 512 without having any unwanted markings thereon or without being snagged by the surfaces thereof

It should be understood that when it is desired to change the stamper printer ink roll because the ink thereon has become depleted or alternatively because a different type of marking is desired, this may be readily accomplished. A servicer does this by deforming or otherwise moving the biasing tab 536 and moving the shaft portion 526 upward such that the annular projection 534 no longer extends in the slot in the biasing tab. This also enables projection 534 to be moved upward and out of a stationary slot 554 in the bracket 538. As the annular projection 534 is moved in this manner the annular projection 540 and radial projection 542 are enabled to be removed from the corresponding recesses in the coupling 552. This enables the housing 544 to be moved such that the ears 546 on the housing can be separated from the positioning projections which help to assure the proper positioning of the ink roll when the housing is in the operative position. Thereafter a new housing shaft and ink roll assembly can be installed. This may be accomplished by reengaging the projections 540 and 542 with the coupling 552 and engaging the projection 534 in the slot of biasing tab 536. During such positioning the positioning projections are also extended in the ears 546 of the housing, to locate the housing and reliably position the ink roll.

It should further be understood that although only one ink roll is shown in the exemplary embodiment, alternative embodiments may include multiple ink rolls or multiple stamper printers which operate to print indicia on checks. Such arrangements may be used for purposes of printing varied types of information on various types of documents. For example in some situations it may be desirable to return a document that has been processed through operation of the device to the user. In such circumstances a stamper printer may print appropriate indicia on the document such as a "void" stamp or other appropriate marking. Of course the type of printing that is conducted may vary as is appropriate for purposes of the particular type of document that is being processed. In other embodiments alternative approaches may be used..

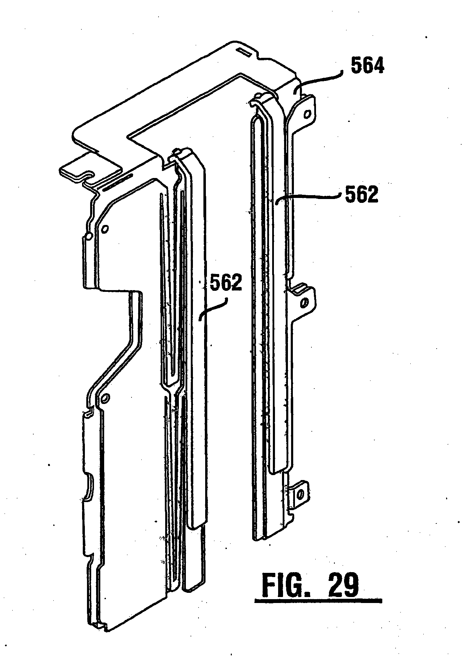

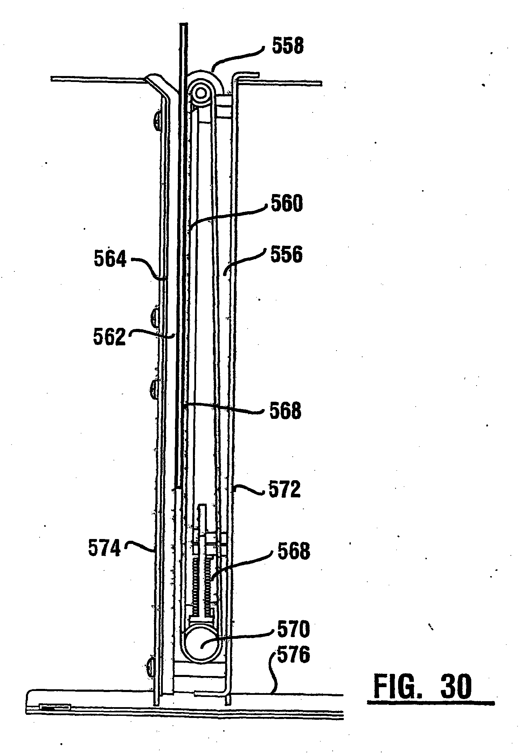

In the exemplary embodiment a document that is to be moved from the escrow area can be more permanently stored in the machine by moving the document to a storage area 430. Documents are moved from the escrow area toward the storage area by moving the document in engagement with belt flight 508 so that the document engages a curved deflector 554. Deflector 554 causes the document to engage a vertical transport 556 that extends in the storage area 430. As best shown in Figure 30 vertical transport 556 includes two continuous belts that are driven by a drive 558. The transport 556 includes a pair of disposed belts, each of which has a belt flight 560. Each belt flight 560 extends in generally opposed relation of a corresponding rail 562 of a vertical guide 564. As shown in Figure 29 guide 564 of the exemplary embodiment is constructed so that the rails 562 are biased toward the belt flights by a resilient material. This helps to assure the document can be moved between the belt flights and the rails in sandwiched relation. Such a document 568 is shown moving between the rails and the belt flights in Figure 30.

It should also be noted that in the exemplary embodiment the drive 558 includes a spring biasing mechanism 568. The biasing mechanism acts on lower rolls 570 to assure proper tension is maintained in the belt flights 560.

Further in the exemplary embodiment the transport belts are housed within a housing which includes a pair of spaced back walls 572. As later discussed, back walls 572 serve as support surfaces for stacks of documents that may be stored in a first section or location of the storage area of the device. Similarly guide 564 includes a pair of transversely disposed wall surfaces 574. Wall surfaces 574 provide support for a stack of documents disposed in a second section or location of the storage area. Also as shown in Figure 30, the vertical transport 556 moves documents to adjacent a lower surface 576 which bounds the interior of the storage area. Document sensing devices are provided along the path of the vertical transport so that the drive 558 can be stopped through operation of at least one processor once the document has reached the lower surface. This helps to assure that documents are not damaged by movement in the drive. Of course these approaches are exemplary and in other embodiments other approaches may be used.

In the exemplary embodiment when at least some documents are moved from the escrow area into the vertical transport, the device operates to print indicia thereon. This may be indicia of various types as described herein, as would be appropriate for the types of documents being processed. In the exemplary embodiment printing on the documents is carried out through operation of an inkjet printer 578. The inkjet printer includes a removably mounted printhead that is adjacent to documents as they are moved in the vertical transport portion of the sheet path. The inkjet printer includes nozzles which are operative to selectively expel ink therefrom toward the sheet path and shoot ink onto the adjacent surface of the document. The nozzles of the inkjet printer operate in accordance with the programming of a processor which is operative to drive the inkjet printer to expel ink selectively therefrom to produce various forms of characters on the documents as may be desired. For example in an exemplary embodiment the printer may be operative to print indica on checks so as to indicate transaction information and/or the cancellation of such checks. In the exemplary embodiment the print head is releasibly mounted through moveable members to enable ready installation and removal.

The exemplary embodiment further includes an ink catching mechanism 580 which is alternatively referred to herein as an ink catcher. In the exemplary embodiment the ink catching mechanism is operative to capture ink that may be discharged from the printhead at times when no document is present. This may occur for example if a document is misaligned in the transport or if the machine malfunctions so that it attempts printing when no document is present. Alternatively the inkjet printer may be operated responsive to at least one processor at times when documents are not present for purposes of conducting head cleaning activities or other appropriate activities for assuring the reliability of the inkjet printer. Further the exemplary embodiment of the ink catcher mechanism is operative to tend the printhead by wiping the nozzles so as to further facilitate reliable operation. Of course it should be understood that the exemplary ink catcher shown and described is only one of many ink catcher configurations that may be used.

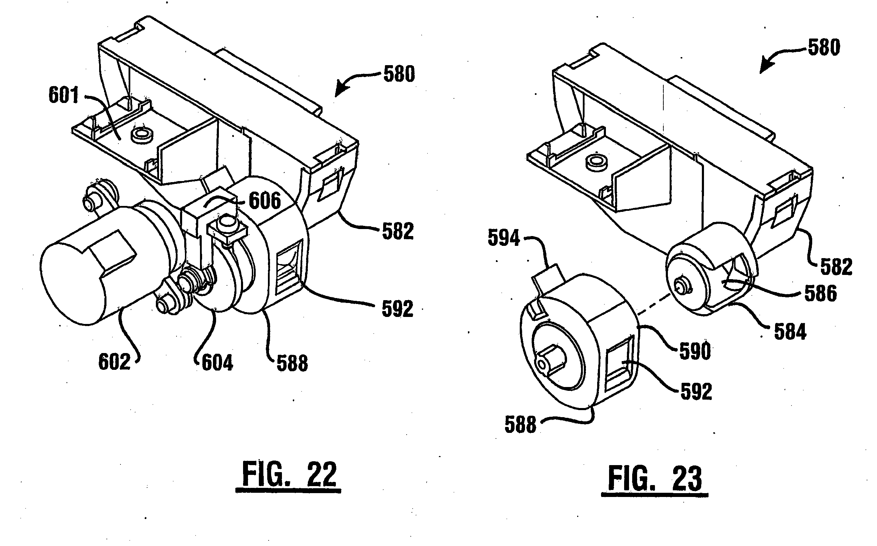

An exemplary form of the ink catching mechanism is shown in Figures 22 through 24. The ink catching mechanism includes an ink holding body 582 with an ink holding area therein. Body 582 has thereon an annular projecting portion 584. Projecting portion 584 has an opening 586 therein. Opening 586 of the projecting portion is in fluid communication with the ink holding interior area of the main portion of the body. Of course this body configuration is merely exemplary.

A head portion 588 is comprised of a body portion configured to extend in overlying relation of the projecting portion 584. Head portion 588 of the exemplary embodiment comprises a generally annular body member that includes a flattened area 590 which has an opening 592 therein. Head portion 588 also has in supporting connection therewith a resilient wiper member 594 extending radially outward therefrom in an area disposed angularly away from the opening 592.

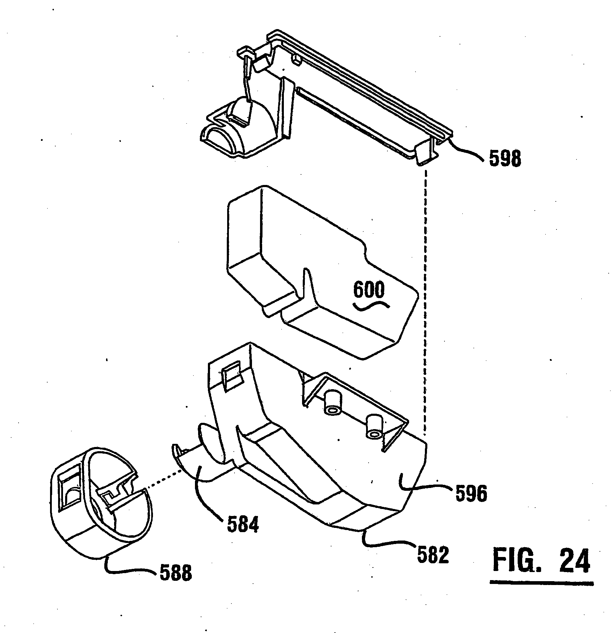

As shown in Figure 24 the exemplary embodiment of body 582 is of a generally clamshell construction and includes a lower portion 596 and an upper portion 598. The upper and lower portions fit together as shown to form the body, including the annular projecting portion. Also housed within the interior of the exemplary embodiment of the body is an ink absorbing member 600. The ink absorbing member is operative to absorb ink which passes into the interior of the body through opening 596. The body is releasibly mounted in the machine through a mounting portioned which accepts suitable fasteners or other holding devices.

In the operative condition the head portion 588 extends in overlying generally surrounding relation of the projecting portion 584. The head portion is enabled to be selectively rotated through operation of a drive 602 that is operatively connected therewith. A disk member 604 and sensor 606 are operative to sense at least one rotational position of the head portion 588.

In operation of the exemplary form of the devices the head portion 588 is generally positioned as shown in Figure 22 with the opening 592 of the head portion in aligned relation with the opening 586 in the projecting portion of the body. The projecting portion extends within an interior area of the rotatable head portion. In this position ink expelled from the inkjet printhead which does not strike a document, passes into the interior of the body through the aligned openings. Thus for example if the programming of the machine calls for the machine to periodically conduct a head cleaning operation in which the nozzles of the inkjet printhead are fired, the ink can be transmitted through sheet path in the area of the transport where documents are normally present and into the body of the ink catcher mechanism. Thereafter or periodically in accordance with the programming of the machine, a processor in operative connection with the drive is operative to cause the drive 602 to rotate the head portion 588. Rotation of the head portion is operative to cause the flexible wiper member 594 to engage the print head and wipe over the openings of the inkjet nozzles. This avoids the buildup of ink which can prevent the efficient operation of the inkjet printer. Once the wiper has moved across the nozzles the head returns to the position so that excess ink is accepted within the body. This is done in the exemplary embodiment by having the head portion rotate in a first rotational direction about a full rotation. In this way the head portion rotates from the position where the openings in the head portion and projecting portion are aligned with the print head. The head portion is rotated so the openings are no longer aligned and the flexible wiper member engages the print head and wipes across the nozzles thereof. The head portion continues to rotate until the openings are again aligned.

In the exemplary embodiment the drive operates responsive to the at least one processor to rotate the head portion in the first rotational direction about 360 degrees and then stops. In other embodiments the drive may reverse direction and/or operate the head portion to undergo multiple rotations. In other embodiments the movable member may include multiple openings and wiper members and may move as appropriate based on the configuration thereof In other embodiments the movable member may include multiple openings and wiper members and may move as appropriate based on the configuration thereof.

In some embodiments the at least one processor may operate the print head periodically to clean or test the print head, and may operate the ink catcher to wipe the nozzles only after such a cleaning or test. In some alternative embodiments wiping action may be done after every print head operation or after a set number of documents have been printed upon. Various approaches may be taken in various embodiments.

In exemplary embodiments suitable detectors are used to determine when the print head needs to be replaced. At least one processor in operative connection with the print head may operate to provide an indication when the print cartridge should be changed. Such an indication may be given remotely in some embodiments, by the machine sending at least one message to a remote computer. In the exemplary embodiment a servicer may readily remove an existing print cartridge such as by moving one or more fasteners, tabs, clips or other members. A replacement cartridge may then be installed, and secured in the machine by engaging it with the appropriate members. In the exemplary embodiment electrical contacts for the print head are positioned so that when the cartridge is in the operative position the necessary electrical connections for operating the print head are made. The new cartridge is installed with the print head thereof positioned in aligned relation with the opening in the head portion of the ink catcher so that ink from the print head will pass into the ink catcher and be held therein if there is no document in the sheet path between the print head and the ink catcher at the time ink is expelled therefrom.

In the exemplary embodiment after a new ink cartridge has been installed a service may test the operation of the printer. This is accomplished by providing appropriate inputs to the machine. A servicer moves a sheet into the sheet path. This may be done in some cases manually and in other cases by providing and moving a sheet in the sheet path through one or more transports. One or more inputs from the servicer to input devices of the machine causes the processor to operate the printer to expel ink from the print head toward the sheet path. If the sheet is present ink impacts the sheet to print thereon. In some cases the processor operates the print head to print an appropriate pattern such as one that tests that all the nozzles are working. In other embodiments other indicia may be printed. Of course if no sheet is present in the sheet path, the ink from the print head passes into the body of the ink catcher through the opening in the head portion. Of course this approach is exemplary, and in other embodiments other approaches and processes may be used.

In some embodiments after printing is conducted the machine may operate to wipe the nozzles of the print head. This may be done in response to the programming associated with the processor and/or in response to an input from a servicer. In such a situation the drive operates to rotate the head portion 588 about the projecting portion 584 so that the flexible wiper member engages the print head. In the exemplary embodiment the wiper member wipes across the print head as the head portion of the ink catcher makes about one rotation from its initial position. The head portion rotates responsive to the drive until the head portion is again sensed as having the opening therein aligned with the print head. This is sensed by the censor 606 sensing the rotational position of the disk member 604. In response to sensing that one head portion is in the position for capturing ink from the print head, the processor is operative to cause the drive to cease operation. Of course these approaches are exemplary and in other embodiments other approaches may be used.

In an exemplary embodiment when the ink catching mechanism has become filled with ink it is possible to replace the body by disengaging one or more fasteners that hold it in position and install a new one in the operative position. Alternatively in some embodiments the body may be opened and the ink absorbing member 600 removed and replaced with a new member.

In the exemplary embodiment the body is disengaged from the machine by disengaging the one or more fasteners or other devices that hold the mounting portion 601 to the adjacent housing structure of the document accepting device. Once this is done the body 580 is moved so that the projecting portion 584 no longer extends within the interior area of the movable head portion 588. Once this is done the body can be discarded. Alternatively, the body may be opened, the ink absorbing member 600 removed, a new ink absorbing member installed and the body again closed.

A new body or one with a new ink absorbing member is installed by extending the projection portion 584 thereof within the interior area of the head portion 588. The body is then fastened in place through the mounting portion. In response to appropriate inputs to an input device of the machine from a servicer, the processor operates to cause the drive 602 to rotate the head portion 588. The processor may operate in accordance with its programming to rotate the head portion 588 only as necessary to align the opening 592 with the print head. Alternatively the processor may operate the drive to make one or more rotations before stopping the rotation of the head portion. In some embodiments the processor may operate the printer to test its operation as previously discussed, and may then rotate the head portion to wipe the nozzles of the print head. Of course these approaches are exemplary and in other embodiments other approaches may be used.

Thus as can be appreciated the exemplary embodiment of the ink catching mechanism provides an effective way for the printer to be operated so as to avoid the deposition of excess ink within the ATM as well as to enable the print nozzles to be maintained in a suitable operating condition so that printing may be reliably conducted.

In the exemplary embodiment documents such as checks are moved into the storage area 430 through the vertical transport 556. Such documents are held initially between the rails 562 of the guide 564 and the belt flights 560 of the vertical transport. In the exemplary embodiments such documents may be selectively stored in one of two available sections (alternatively referred to herein as locations) of the storage area. These include a first storage location 608 positioned on a first side of the vertical transport and a second storage location 610 positioned on an opposed transverse side of the vertical transport. Selective positioning of documents into the storage locations is accomplished through use of a movable plunger member 612 which operates responsive to one or more processors to disengage documents from the vertical transport and move the documents into either the first storage location or second storage location of the storage area.

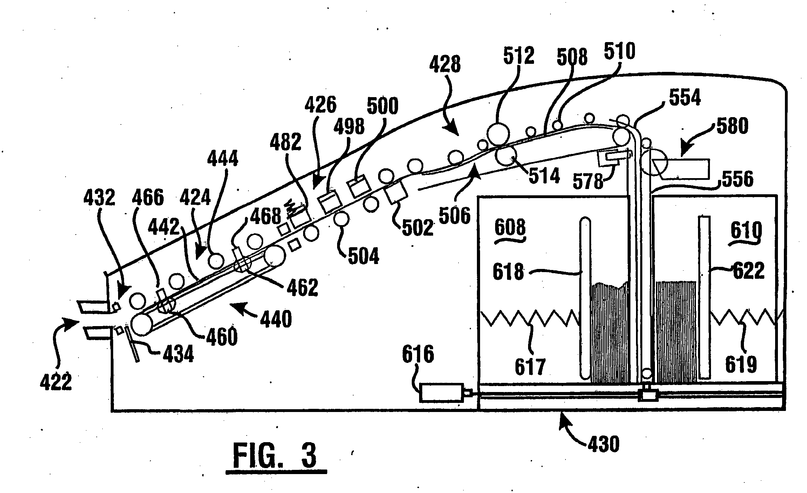

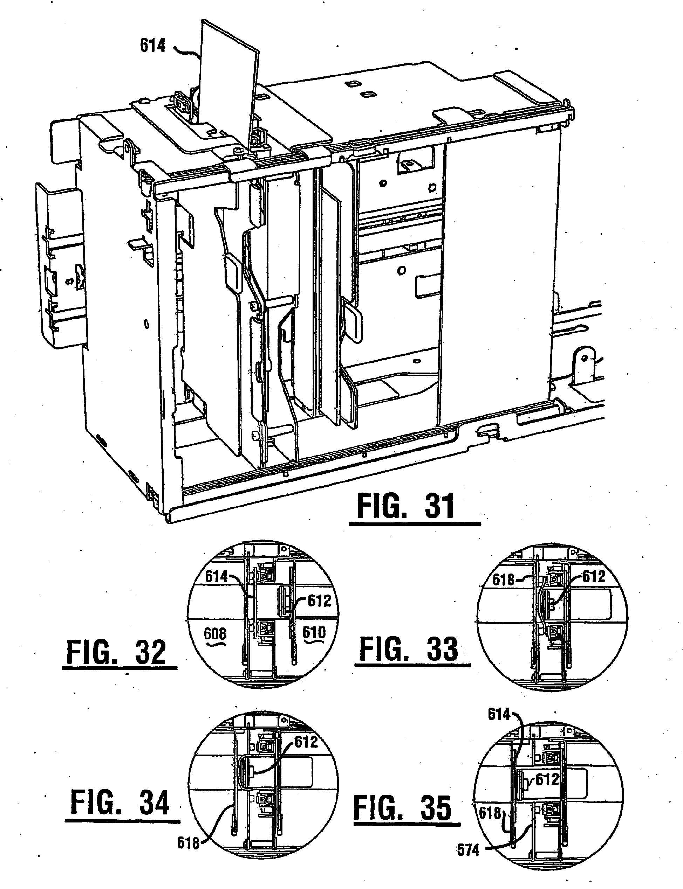

Figures 31 through 35 show the operation of the exemplary plunger member to move a document 614 into storage location 608. As shown in Figure 32 when the document 614 has moved downward into the storage area, the plunger 612 has been positioned to the right of the document as shown in storage location 610. In the exemplary embodiment movement of the plunger member is accomplished through use of a suitable drive and movement mechanism such as a rack drive, worm drive, tape drive or other suitable movement device. Such a drive is represented schematically by drive 616 in Figure 3.

Once the document has been moved to the proper position and the vertical transport is stopped, the plunger 612 moves from the position shown in Figure 32 to the left so as to engage the document. Such engagement with the document deforms the contour of the document as shown and begins to pull the document transversely away from engagement with the belt flights and the guide rails. A spring biased backing plate 618 which may have additional documents in supporting connection therewith, is moved by the action of the plunger as shown in Figures 33 and 34. Backing plate 618 is biased by a spring or other suitable device so that documents in supporting connection with the backing plate are generally trapped between the backing plate and the wall surfaces 574 of the guide.

As represented in Figures 34 and 35 as the plunger 612 moved further toward the storage location 608, the document disengages from the rails and belts so that the document is eventually held in supported relation with the backing plate 618 by the plunger. Once the document 614 has reached this position as shown in Figure 35 the plunger may be moved again to the right as shown such that the document 614 is integrated into the document stack supported on backing plate 618. Further as the plunger 612 returns toward its original position, the documents supported on the backing plate are held in sandwiched relation between the wall surfaces 574 of the guide and the backing plate. Thus the document 614 which was moved into the storage area has been selectively moved through operation of the plunger into the storage location 608.

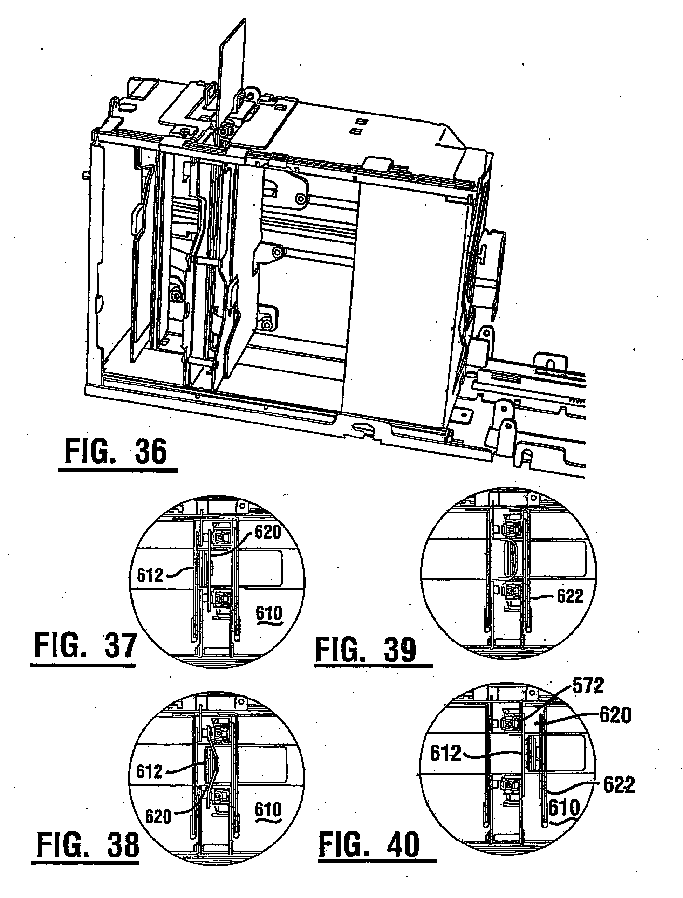

Figures 36 through 40 show operation of the plunger member to store a document in storage location 610. As shown in Figure 37 a document 620 is moved into the vertical transport and because this document is to be stored in storage location 610 the plunger member 612 is positioned responsive to operation of the processor to the left of the document as shown. As shown in Figures 38 and 39 movement of the plunger member 612 toward the right as shown disengages the document from the transport and brings it into supporting connection with a spring loaded backing plate 622. Backing plate 622 is biased by a spring or other suitable biasing mechanism toward the left as shown in Figures 39 and 40.

Movement of the plunger 612 to the extent shown in Figure 40 causes the document 620 to be supported in a stack on the backing plate 622. In this position the plunger may be again moved to the left such that the documents in the stack in storage location 610 are held in sandwiched relation between the back walls 572 of the vertical transport and the backing plate.

As can be appreciated in the exemplary embodiment documents can be selectively stored in a storage location of the device by positioning and moving the plunger so that the document is stored in the storage location as desired. This enables documents to be segregated into various document types. For example in some embodiments the ATM may be operated such that checks that are drawn on the particular institution operating the machine are stored in one storage location of the storage area 430 while others that are not drawn on that institution are stored in the other storage location. Alternatively in some embodiments where the mechanism is used to accept checks and currency bills, bills which have been validated may be stored in one storage location while bills that have been determined to be counterfeit or suspect may be stored in another storage section. In still further alternative embodiments where the device is operated to accept checks and bills, currency bills may be stored in one storage location while checks are stored in another.

In alternative embodiments additional provisions may be made. For example in some embodiments one or more aligned vertical transports may be capable of transporting documents through several vertically aligned storage areas. In such situations a document maybe moved to the vertical level associated with a storage area that is appropriate for the storage of the document Once at that level a plunger may move transversely so as to place the document into the appropriate storage location on either side of the vertical transport. In this way numerous types of documents can be accepted and segregated within the ATM.

In still other alternative embodiments the storage mechanism may be integrated with a document picker mechanism such as shown in U.S. Patent No. 6,331,000 the disclosure of which is incorporated by reference. Thus documents which have been stored such as currency bills may thereafter be automatically removed through operation of the picker mechanism and dispensed to users of the ATM machine. Various approaches may be taken utilizing the principals of the described embodiments.

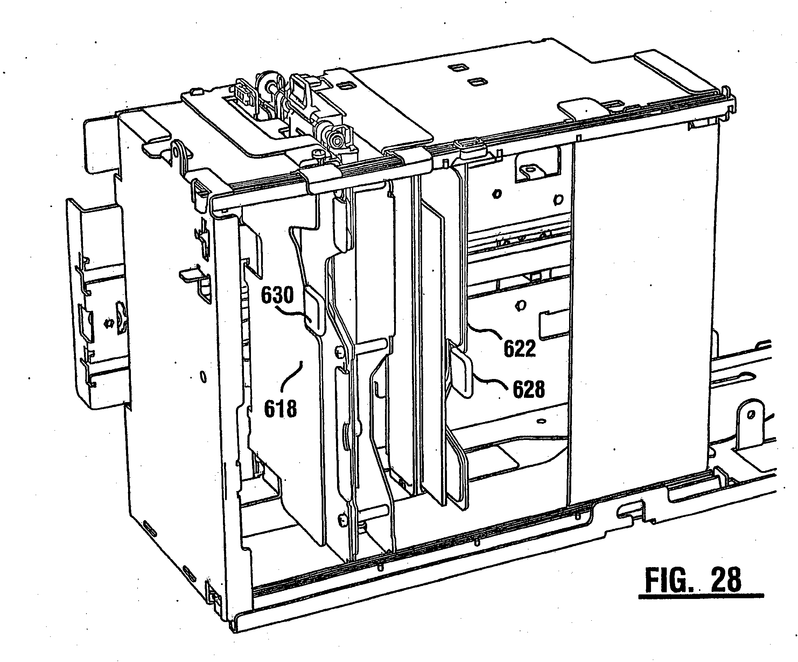

As shown in Figure 2 exemplary storage area 440 is generally held in a closed position such that the items stored therein are not accessible even to a servicer who has access to the interior of the ATM. This is accomplished through use of a sliding door 624 which in the exemplary embodiment is constructed of collapsible sections. The door is enabled to be moved such that access to documents stored in the storage area can be accessed such as is shown in Figure 28. In an exemplary embodiment the ability to open door 624 is controlled by a lock 626. In the exemplary embodiment lock 626 comprises a key lock such that authorized persons may gain access to the interior of the storage area if they possess an appropriate key.

In some exemplary embodiments the deposit accepting device may be mounted in movable supporting connection with structures in the interior of the housing of the banking machine. This may be done in the manner shown in U.S. Patent No. 6,010,065 the disclosure of which is incorporated herein by reference. In some exemplary embodiments a servicer may access the interior of the banking machine housing by opening one or more external doors. Such doors may require the opening of one or more locks before the interior of the housing may be accessed. With such a door open the servicer may move the deposit accepting device 420 while supported by the housing so that the storage area of the device extends outside the housing. This may make it easier in some embodiments to remove documents from the storage area.

In the exemplary embodiment persons authorized to remove documents from the storage area may open the lock and move the door 624 to an open position so as to gain access to the interior of the storage area. Documents that have been positioned in the storage locations can be removed by moving the backing plates 622 and 618 against the spring biasing force of the respective springs or other biasing mechanisms 617, 619, that holds the stacks of stored documents in sandwiched relation. Manually engageable tabs 628 and 630 are provided in the exemplary embodiment so as to facilitate the servicer's ability to move the backing plates against the respective biasing force. With the respective backing plate moved horizontally away from the vertical transport, the stack of documents between the backing plate and vertical transport can be removed Each backing plate can be moved to remove document stacks on each horizontal side of the vertical transport. Once the stored documents have been removed, the backing plates can return automatically to the appropriate position to accept more documents due to the biasing force. Likewise the door 624 can be closed and the lock returned to the locked position. If the deposit accepting device is movably mounted so that the storage area is outside the machine, it can be moved back into the interior of the housing. The housing can then be secured by closing the doors and locks thereon. This construction of the exemplary embodiment not only facilitates the removal of checks, currency or other documents, but is also helpful in clearing any jams that may occur within the vertical transport.

The exemplary embodiment also provides advantages in terms of clearing jams within the document alignment, analysis and/or escrow areas. For example as shown in Figures 1 and 2, the device may be opened such that the entire transport path for documents up to the point of the vertical transport may be readily accessed. As a result in the event that the document should become jammed therein, a servicer may unlatch a latch which holds a platen in position such as for example latch 632 shown in Figure 1 and move the platen 448 rotationally and the components supported thereon to the position shown so as to enable exposing the document alignment area and document analysis area. As can be appreciated platen 448 is mounted through hinges which enable the platen to rotate about an axis through the hinges so as to facilitate the opening thereof. Likewise the portions of the platen 449 supporting the mechanisms overlying the escrow area can be opened as shown to expose that area of the document transport path so as to facilitate accessing documents therein. As shown in Figures 1 and 2, platen 449 is rotatable about an axis that extends generally perpendicular to the axis about which platen 448 is rotatable. Further in the exemplary embodiment, platens 448 and 449 are configured so that platen 448 must be moved to the open position before platen 449 can be opened Likewise platen 449 must be closed before platen 448 is closed. This exemplary construction enables the use of a single latch to secure the platens in the operative positions, and to enable unsecuring the single latch so that the platens can both be moved to expose the document alignment, document analysis and escrow areas of the document transport path in the device. Of course, this approach is exemplary and in other embodiments other approaches may be used.

In servicing the exemplary embodiment of the deposit accepting device 420 which for purposes of this service discussion will be described with regard to checks, a servicer generally begins by opening a door or other access mechanism such as a fascia or panel that enables gaining access to an interior area of the housing of the ATM. In an exemplary embodiment the check accepting device 420 is supported on slides, and after unlatching a mechanism that normally holds the device in operative position, the device can be moved, while supported by the housing to extend outside the ATM. Of course in some situations and depending on the type of service to be performer, it may not be necessary to extend the device outside the ATM housing. Alternatively in some situations a servicer may extend the device outside the housing and then remove the device from supporting connection with the ATM housing completely. This maybe done for example, when the entire device is to be replaced with a different device.

The servicer may disengage the latch 632 and rotate platen 448 about the axis of its hinges. This exposes the areas of the transport path through the device in the document alignment area 424 and document analysis area 426. It should be noted that when the platen 448 is moved to the open position the toothed contoured edges 456,458 shown in Figure 4, are moved apart.

With the platen 448 moved to expose the document alignment and document analysis areas, any checks which have become caught or jammed therein can be removed by the servicer. The servicer can also conduct other activities such as cleaning the scanning sensors or the magnetic read head. Such cleaning may be done using suitable solvents, swabs or other materials. The servicer may also clean, align, repair or replace other items in the exposed areas of the transport path.

With platen 448 in the open position a servicer may also move platen 449 from the closed position to the open position shown in Figures 2 and 3. Rotating platen 449 about the axis of its supports to the open position, exposes the escrow area 428 of the transport path. A servicer may then clear any jammed documents from the escrow area. The servicer may also clean, align, repair or replace other components that are exposed or otherwise accessible in the escrow area.

Upon completion of service the platen 449 is rotated to the closed position. Thereafter the platen 448 is rotated to the closed position. This brings the contoured edges 456, 458 back into adjacent alignment. With platen 448 in the closed position the latch 632 is secured to hold both platens in the closed positions, the check accepting device can then be moved back into the operating position and secured therein. The servicer when done, will then close the door or other device to close the interior of the ATM housing. Of course these approaches are exemplary.

Upon closing the housing the ATM may be returned to service. This may include passing a test document through the transport path through the deposit accepting device 420 and/or reading indicia of various types from one or more test documents. Of course it should be understood that these approaches are exemplary and in other embodiments other approaches may be used.

Thus the deposit accepting apparatus and system of the exemplary embodiments achieve at least some of the above stated objectives, eliminate difficulties encountered in the use of prior devices and systems, and attain the useful results described herein.

In the foregoing description certain terms have been described as exemplary embodiments for purposes of brevity, clarity and understanding. However no unnecessary limitations are to be implied therefrom because such terms are used for descriptive purposes and are intended to be broadly construed. Moreover the descriptions and illustrations herein are by way of examples and the invention is not limited to the features shown or described.

Further, in the following claims any feature described as a means for performing a function shall be construed as encompassing any means known to those skilled in the art as being capable of carrying out the recited function, and shall not be deemed limited to the particular means shown or described for performing the recited function in the foregoing description, or mere equivalents thereof.

Having described the features, discoveries and principles of the invention, the manner in which it is constructed and operated, any of the advantages and useful results attained; the new and useful structures, devices, elements, arrangements, parts, combinations, systems, equipment, operations, methods, processes and relationships are set forth in the appended claims.

## Claims

1. An automated banking machine apparatus comprising:
a sheet path extending within the machine, wherein sheets move in the sheet path;
an inkjet printhead positioned adjacent to and on a first side of the sheet path, wherein the printhead is adapted to print indicia on sheets in the sheet path;
an ink catcher (580) positioned on a second side of the sheet path opposite of the printhead, wherein the ink catcher includes:
a rotatably mounted first body potion (582) including a first ink accepting opening (592) to an interior area thereof; and
a flexible wiper member (594) in supporting connection with the first body portion;
a drive (602) in operative connection with the first body portion (582), wherein the drive (602) is adapted to cause the first body portion (582) to rotate between a first position wherein the first ink accepting opening is aligned to accept ink from the printhead, and a second position angularly disposed from the first position wherein the wiper member engages the printhead.

2. The apparatus according to claim 1 wherein the ink catcher further includes:
a body, wherein the body has an ink holding area, wherein the body extends in the interior area of the rotatably mounted frist bodyportion.

3. The apparatus according to claim 2 wherein the body further includes a projecting portion, wherein the projecting portion includes a second ink accepting opening, wherein the second ink accepting opening extends in the interior area of the first body portion and is in fluid communication with the ink holding area,

4. The apparatus according to claim 3 wherein in the first position of the first body portion the second ink accepting opening is generally aligned with the first ink accepting opening and the printhead.

5. The apparatus according to claim 4 wherein the projecting portion is generally cylindrical and extends within the interior area of the first body portion.

6. The apparatus according to claim 4 wherein the first body portion is generally cylindrical and includes a flattened area on an exterior surface thereof, wherein the first ink accepting opening extends through the first body portion in the flattened area.

7. The apparatus according to claim 6 therein the flexible wiper member is in supporting connection with the first body portion and is angularly disposed from the flattened area.

8. The apparatus according to claim 7 and further comprising an ink absorbing member positioned in the ink holding area of the body.

9. The apparatus according to claim 8 and further comprising a mounting portion in supporting connection with the body, wherein the mounting portion is releasibly engageable in supporting connection with a housing portion of the machine.

10. The apparatus according to claim 9 and further comprising:
a scanning sensor adjacent the sheet path, wherein the scanning sensor is adapted to produce data corresponding to at least one image of at least one portion of at least one sheet positioned in the sheet path.

11. The apparatus according to claim 10 and further comprising:
a first transport, wherein the first transport moves sheets in a first direction in the sheet path, wherein sheets move in the first direction relative to the scanning sensor;
a plurality of non-contact alignment sensors, at least two of the alignment sensors being disposed from one another along the first direction;
a second transport, wherein the second transport moves sheets in a second direction generally transverse of the first direction and wherein the second transport is operative to move sheets in the transverse direction responsive to such sheets being sensed by a plurality of the alignment sensors.

12. The apparatus according to claim 11 and further comprising:
at least one magnetic read head positioned adjacent the sheet path, wherein the at least one magnetic read head is adapted to produce data corresponding to magnetic indicia on sheets in the sheet path.

13. The apparatus according to claim 12 and further comprising:
at least one user input device adapted to receive inputs from users of the machine, wherein the inputs are usable to identify at least one of a user and a user associated account;
at least one output device adapted to produce outputs from the machine;
at least one cash dispenser adapted to dispense cash to users of the machine.

14. The apparatus according to claim 13 and further comprising:
at least one terminal processor in operative connection with the printhead and the drive, wherein the at least one terminal processor is operative to cause the printhead to print indicia on at least one sheet, and to cause the rotatably mounted first body portion to rotate to cause the flexible wiper member to engage the printhead at a time when the printhead is not operated to print indicia.

15. The apparatus according to claim 1 and further composing:
at least one terminal processor in operative connection with the printhead and the drive, wherein the at least one terminal processor is operative to cause the printhead to print indicia on at least one sheet, and to cause the rotatably mounted first body portion to rotate to cause the flexible wiper member to engage the printhead.

16. The apparatus according to claim 14 wherein the at least one terminal processor is in operative connection with the scanning sensor, and wherein the at least one terminal processor is operative to resolve numerical data corresponding to indicia on the at least one sheet responsive to the data corresponding to at least one image.

17. The apparatus according to claim 16 wherein the at least one terminal processor is operative to cause the machine to send data corresponding to at least one image to a remote computer.

18. The apparatus according to claim 17 wherein the at least one terminal processor is operative to cause the cash dispenser to operate responsive to at least one communication received by the machine from a remote computer.

19. The apparatus according to claim 18 and further comprising:
a storage area in operative connection with the sheet path, wherein at least one sheet on which indicia is printed through operation of the printhead moves to the storage area.

20. The apparatus according to claim 19 and further comprising:
a movable member movable in the storage area;
a further drive in operative connection with the movable member, wherein the movable member is movable responsive to operation of the further drive;
and wherein the storage area comprises a plurality of storage sections, and wherein the further drive is in operative connection with the at least one terminal processors, and wherein the at least one movable member is adapted to move responsive to the at least one terminal processor to cause sheet received in the storage area from the sheet path to be selectively positioned in the plurality of storage sections.

21. The apparatus according to claim 1 and further comprising:
at least one terminal processor;
at least one cash dispenser;
wherein the at least one terminal processor is in operative connection with the drive, printhead and cash dispenser, and wherein the at least one terminal processor is operative to cause the printhead to print indicia on at least one sheet in the sheet path, cause the drive to rotate the fast body portion to cause the flexible wiper member to engage the printhead, and to cause the cash dispenser to operate whereby cash is dispensed from the machine.

22. The apparatus according to claim 21 and further comprising:
a scanning sensor adjacent the sheet path, wherein the scanning sensor is operative to produce data corresponding to an image of at least a portion of at least one sheet.

23. The apparatus according to claim 22 wherein the scanning sensor is in operative connection with the at least one terminal processor, and wherein the at least one terminal processor is operative to cause the machine to send data corresponding to the image to at least one remote computer.

24. The apparatus according to claim 23 wherein the at least one sheet comprises a check.

25. The apparatus according to claim 24 wherein the at least one terminal processor is operative to cause the printhead to expel ink when no sheet is adjacent the printhead in the sheet path, and then causes the drive to operate to rotate the first body portion in a first direction and cause the flexible wiper member to engage the printhead, and then causes the drive to rotate the first body portion further in the first direction until the first ink accepting opening is generally aligned with the printhead.

26. The apparatus according to claim 25 wherein the ink catcher further comprises a body including an ink holding area and a projecting portion, wherein the ink holding area is in fluid connection with the projecting portion, and wherein the first body portion rotates about the projecting portion.

## Patentansprüche

1. Bankautomatvorrichtung, die Folgendes umfasst:
einen Blattweg, der sich innerhalb der Maschine erstreckt, wobei sich Blätter in dem Blattweg bewegen;
einen Tintenstrahldruckkopf, der bei und auf einer ersten Seite des Blattwegs positioniert ist, wobei der Druckkopf ausgelegt ist zum Drucken von Angaben auf Blätter in dem Blattweg;
einen Tintenfänger (580), der auf einer zweiten Seite des Blattwegs gegenüber dem Druckkopf positioniert ist, wobei der Tintenfänger Folgendes enthält:
einen drehbar montierten ersten Körperabschnitt (582) einschließlich einer ersten Tintenaufnahmeöffnung (592) zu einem inneren Bereich davon und
ein flexibles Wischerglied (594) in einer Stützverbindung mit dem ersten Körperabschnitt;
einen Antrieb (602) in operativer Verbindung mit dem ersten Körperabschnitt (582), wobei der Antrieb (602) ausgelegt ist, um zu bewirken, dass sich der erste Körperabschnitt (582) zwischen einer ersten Position, in der die erste Tintenaufnahmeöffung ausgerichtet ist, Tinte von dem Druckkopf aufzunehmen, und einer winkelmäßig von der ersten Position angeordneten zweiten Position dreht, wobei das Wischerglied den Druckkopf in Eingriff nimmt.

2. Vorrichtung nach Anspruch 1, wobei der Tintenfänger weiterhin Folgendes enthält:
einen Körper, wobei der Körper einen Tintenhaltebereich aufweist, wobei sich der Körper in den inneren Bereich des drehbar montierten ersten Körperabschnitts erstreckt.

3. Vorrichtung nach Anspruch 2, wobei der Körper weiterhin einen Vorsprungsabschnitt enthält, wobei der Vorsprungsabschnitt eine zweite Tintenaufnahmeöffnung enthält, wobei sich die zweite Tintenaufnahmeöffnung in dem inneren Bereich des ersten Körperabschnitts erstreckt und mit dem Tintenhaltebereich in Fluidkommunikation steht.

4. Vorrichtung nach Anspruch 3, wobei die zweite Tintenaufnahmeöffnung in der ersten Position des ersten Körperabschnitts allgemein auf die erste Tintenaufnahmeöffnung und den Druckkopf ausgerichtet ist.

5. Vorrichtung nach Anspruch 4, wobei der Vorsprungsabschnitt allgemein zylindrisch ist und sich innerhalb des inneren Bereichs des ersten Körperabschnitts erstreckt.

6. Vorrichtung nach Anspruch 4, wobei der erste Körperabschnitt allgemein zylindrisch ist und einen abgeflachten Bereich auf einer äußeren Oberfläche davon enthält, wobei sich die erste Tintenaufnahmeöffnung durch den ersten Körperabschnitt in dem abgeflachten Bereich erstreckt.

7. Vorrichtung nach Anspruch 6, wobei sich das flexible Wischerglied in einer Stützverbindung mit dem ersten Körperabschnitt befindet und winkelmäßig von dem abgeflachten Bereich angeordnet ist.

8. Vorrichtung nach Anspruch 7 und weiterhin umfassend ein in dem Tintenhaltebereich des Körpers positioniertes Tintenabsorbierungsglied.

9. Vorrichtung nach Anspruch 8 und weiterhin umfassend einen Montageabschnitt in Stützverbindung mit dem Körper, wobei der Montageabschnitt mit einem Gehäuseabschnitt der Maschine in einer Stützverbindung lösbar in Eingriff gebracht werden kann.

10. Vorrichtung nach Anspruch 9 und weiterhin umfassend:
einen Abtastsensor bei dem Blattweg, wobei der Abtastsensor ausgelegt ist zum Erzeugen von Daten entsprechend mindestens einem Bild mindestens eines Abschnitts mindestens eines in dem Blattweg positionierten Blatts.

11. Vorrichtung nach Anspruch 10 und weiterhin umfassend:
einen ersten Transport, wobei der erste Transport Blätter in einer ersten Richtung in dem Blattweg bewegt, wobei sich die Blätter in der ersten Richtung relativ zu dem Abtastsensor bewegen;
mehrere kontaktlose Ausrichtsensoren, wobei mindestens zwei der Ausrichtsensoren voneinander entlang der ersten Richtung angeordnet sind;
einen zweiten Transport, wobei der zweite Transport Blätter in einer zweiten Richtung allgemein quer zu der ersten Richtung bewegt und wobei der zweite Transport dahingehend arbeitet, Blätter in der Querrichtung als Reaktion darauf zu bewegen, dass solche Blätter durch mehrere der Ausrichtsensoren erfasst werden.

12. Vorrichtung nach Anspruch 11 und weiterhin umfassend:
mindestens einen magnetischen Lesekopf, bei dem Blattweg positioniert, wobei der mindestens eine magnetische Lesekopf ausgelegt ist zum Erzeugen von Daten entsprechend magnetischen Angaben auf Blättern in dem Blattweg.

13. Vorrichtung nach Anspruch 12 und weiterhin umfassend:
mindestens eine Benutzereingabeeinrichtung, ausgelegt zum Empfangen von Eingaben von Benutzern der Maschine, wobei die Eingaben verwendet werden können zum Identifizieren eines Benutzers und/oder eines mit dem Benutzer assoziierten Kontos;
mindestens eine Ausgabeeinrichtung, ausgelegt zum Erzeugen von Ausgaben von der Maschine;
mindestens einen Geldautomaten, ausgelegt zum Ausgeben von Bargeld an Benutzer der Maschine.

14. Vorrichtung nach Anspruch 13 und weiterhin umfassend:
mindestens einen Terminalprozessor in operativer Verbindung mit dem Druckkopf und dem Antrieb, wobei der mindestens eine Terminalprozessor dahingehend arbeitet, zu bewirken, dass der Druckkopf Angaben auf mindestens ein Blatt druckt, und um zu bewirken, dass sich der drehbar montierte erste Körperabschnitt dreht, um zu bewirken, dass das flexible Wischerglied den Druckkopf zu einem Zeitpunkt in Eingriff nimmt, wenn der Druckkopf nicht betrieben wird, um Angaben zu drucken.

15. Vorrichtung nach Anspruch 1 und weiterhin umfassend:
mindestens einen Terminalprozessor in operativer Verbindung mit dem Druckkopf und dem Antrieb, wobei der mindestens eine Terminalprozessor dahingehend arbeitet, zu bewirken, dass der Druckkopf Angaben auf mindestens ein Blatt druckt, und um zu bewirken, dass sich der drehbar montierte erste Körperabschnitt dreht, um zu bewirken, dass das flexible Wischerglied den Druckkopf in Eingriff nimmt.

16. Vorrichtung nach Anspruch 14, wobei sich der mindestens eine Terminalprozessor in operativer Verbindung mit dem Abtastsensor befindet und wobei der mindestens eine Terminalprozessor dahingehend arbeitet, numerische Daten aufzulösen, die Angaben auf dem mindestens einen Blatt entsprechen, als Reaktion auf die Daten entsprechend mindestens einem Bild.

17. Vorrichtung nach Anspruch 16, wobei der mindestens eine Terminalprozessor dahingehend arbeitet, zu bewirken, dass die Maschine Daten entsprechend mindestens einem Bild an einen abgesetzten Computer sendet.

18. Vorrichtung nach Anspruch 17, wobei der mindestens eine Terminalprozessor dahingehend arbeitet, zu bewirken, dass der Geldautomat als Reaktion auf mindestens eine durch die Maschine von einem abgesetzten Computer empfangene Kommunikation arbeitet.

19. Vorrichtung nach Anspruch 18 und weiterhin umfassend:
einen Aufbewahrungsbereich in operativer Verbindung mit dem Blattweg, wobei mindestens ein Blatt, auf das Angaben durch den Betrieb des Druckkopfs gedruckt sind, sich zu dem Aufbewahrungsbereich bewegt.

20. Vorrichtung nach Anspruch 19 und weiterhin umfassend:
ein bewegliches Glied, das in dem Aufbewahrungsbereich bewegt werden kann;
ein weiterer Antrieb in operativer Verbindung mit dem beweglichen Glied, wobei das bewegliche Glied als Reaktion auf einen Betrieb des weiteren Antriebs bewegt werden kann;
und wobei der Aufbewahrungsbereich mehrere Aufbewahrungssektionen umfasst und wobei der weitere Antrieb in operativer Verbindung mit dem mindestens einen Terminalprozessor steht, und wobei das mindestens eine bewegliche Glied ausgelegt ist zum Bewegen als Reaktion auf den mindestens einen Terminalprozessor, um zu bewirken, dass in dem Aufbewahrungsbereich von dem Blattweg empfangene Blätter selektiv in den mehreren Aufbewahrungssektionen positioniert werden.

21. Vorrichtung nach Anspruch 1 und weiterhin umfassend:
mindestens einen Terminalprozessor;
mindestens einen Geldautomaten;
wobei der mindestens eine Terminalprozessor in operativer Verbindung mit dem Antrieb, dem Druckkopf und dem Geldautomaten steht, und
wobei der mindestens eine Terminalprozessor dahingehend betätigt werden kann, zu bewirken, dass der Druckkopf Angaben auf mindestens ein Blatt in dem Blattweg druckt, zur Bewirkung, dass der Antrieb den ersten Körperabschnitt dreht, um zu bewirken, dass das flexible Wischerglied den Druckkopf in Eingriff nimmt, und um zu bewirken, dass der Geldautomat arbeitet, wodurch Geld aus der Maschine ausgegeben wird.

22. Vorrichtung nach Anspruch 21 und weiterhin umfassend:
einen Abtastsensor bei dem Blattweg, wobei der Abtastsensor dahingehend betätigt werden kann, Daten entsprechend einem Bild mindestens eines Abschnitts mindestens eines Blatts zu erzeugen.

23. Vorrichtung nach Anspruch 22, wobei der Abtastsensor in operativer Verbindung mit dem mindestens einen Terminalprozessor steht und wobei der mindestens eine Terminalprozessor dahingehend betätigt werden kann, zu bewirken, dass die Maschine Daten entsprechend dem Bild an mindestens einen abgesetzten Computer sendet.

24. Vorrichtung nach Anspruch 23, wobei das mindestens eine Blatt einen Scheck umfasst.

25. Vorrichtung nach Anspruch 24, wobei der mindestens eine Terminalprozessor dahingehend arbeitet, zu bewirken, dass der Druckkopf Tinte ausstößt, wenn sich kein Blatt neben dem Druckkopf in dem Blattweg befindet, und dann bewirkt, dass der Antrieb arbeitet, den ersten Körperabschnitt in einer ersten Richtung zu drehen, und bewirkt, dass das flexible Wischerglied den Druckkopf in Eingriff nimmt, und dann bewirkt, dass der Antrieb den ersten Körperabschnitt weiter in der ersten Richtung dreht, bis die erste Tintenaufnahmeöffnung allgemein auf den Druckkopf ausgerichtet ist.

26. Vorrichtung nach Anspruch 25, wobei der Tintenfänger weiterhin einen Körper mit einem Tintenhaltebereich und einem Vorsprungsabschnitt umfasst, wobei der Tintenhaltebereich mit dem Vorsprungsabschnitt in Fluidverbindung steht und wobei sich der erste Körperabschnitt um den Vorsprungsabschnitt dreht.

## Revendications

1. Appareil de guichet bancaire automatisé comportant :
un parcours de feuilles s'étendant à l'intérieur de la machine, des feuilles se déplaçant dans le parcours de feuilles ;
une tête d'impression à jet d'encre positionnée au voisinage et sur un premier côté du parcours de feuilles, la tête d'impression étant prévue pour imprimer des repères sur des feuilles dans le parcours de feuilles ;
un collecteur (580) d'encre positionné sur un deuxième côté du parcours de feuilles à l'opposé de la tête d'impression, le collecteur d'encre comprenant :
une première partie (582) de corps montée de façon tournante, comprenant une première ouverture (592) d'admission d'encre dans une zone intérieure de celle-ci ; et
un organe racleur souple (594) en liaison de soutien avec la première partie de corps ;
une transmission (602) en liaison fonctionnelle avec la première partie (582) de corps, la transmission (602) étant prévue pour faire pivoter la première partie (582) de corps entre une première position où la première ouverture d'admission d'encre est alignée pour admettre de l'encre provenant de la tête d'impression et une deuxième position disposée angulairement par rapport à la première position et où l'organe racleur interagit avec la tête d'impression.

2. Appareil selon la revendication 1, le collecteur d'encre comprenant en outre :
un corps, le corps possédant une zone de retenue d'encre, le corps s'étendant dans la zone intérieure de la première partie de corps montée de façon tournante.

3. Appareil selon la revendication 2, le corps comprenant en outre une partie saillante, la partie saillante comprenant une deuxième ouverture d'admission d'encre, la deuxième ouverture d'admission d'encre s'étendant dans la zone intérieure de la première partie de corps et étant en communication fluidique avec la zone de retenue d'encre.

4. Appareil selon la revendication 3, la deuxième ouverture d'admission d'encre étant, dans la première position de la première partie de corps, généralement alignée avec la première ouverture d'admission d'encre et la tête d'impression.

5. Appareil selon la revendication 4, la partie saillante étant généralement cylindrique et s'étendant à l'intérieur de la zone intérieure de la première partie de corps.

6. Appareil selon la revendication 4, la première partie de corps étant généralement cylindrique et comprenant une zone aplatie sur une surface extérieure de celle-ci, la première ouverture d'admission d'encre s'étendant à travers la première partie de corps dans la zone aplatie.

7. Appareil selon la revendication 6, l'organe racleur souple étant en liaison de soutien avec la première partie de corps et étant disposé angulairement par rapport à la zone aplatie.

8. Appareil selon la revendication 7 et comportant en outre un organe absorbeur d'encre positionné dans la zone de retenue d'encre du corps.

9. Appareil selon la revendication 8 et comportant en outre une partie de montage en liaison de soutien avec le corps, la partie de montage pouvant être placée de façon détachable en liaison de soutien avec une partie d'enceinte de la machine.

10. Appareil selon la revendication 9 et comportant en outre :
un capteur à balayage au voisinage du parcours de feuilles, le capteur à balayage étant prévu pour produire des données correspondant à au moins une image d'au moins une partie d'au moins une feuille positionnée dans le parcours de feuilles.

11. Appareil selon la revendication 10 et comportant en outre :
un premier transport, le premier transport déplaçant des feuilles dans une première direction dans le parcours de feuilles, les feuilles se déplaçant dans la première direction par rapport au capteur à balayage ;
une pluralité de capteurs d'alignement sans contact, au moins deux des capteurs d'alignement étant disposés l'un par rapport à l'autre suivant la première direction ;
un deuxième transport, le deuxième transport déplaçant des feuilles dans une deuxième direction généralement transverse à la première direction et le deuxième transport étant exploitable pour déplacer des feuilles dans la direction transverse en réponse à la détection desdites feuilles par une pluralité des capteurs d'alignement.

12. Appareil selon la revendication 11 et comportant en outre :
au moins une tête de lecture magnétique positionnée au voisinage de parcours de feuilles, la ou les têtes de lecture magnétique étant prévues pour produire des données correspondant à des repères magnétiques figurant sur des feuilles présentes dans le parcours de feuilles.

13. Appareil selon la revendication 12 et comportant en outre :
au moins un dispositif de saisie d'utilisateur prévu pour recevoir des saisies de la part d'utilisateurs de la machine, les saisies étant utilisables pour identifier un utilisateur et / ou un compte associé à un utilisateur ;
au moins un dispositif de sortie prévu pour produire des sorties provenant de la machine ;
au moins un distributeur de billets prévu pour distribuer des espèces à des utilisateurs de la machine.

14. Appareil selon la revendication 13 et comportant en outre :
au moins un processeur de terminal en liaison fonctionnelle avec la tête d'impression et la transmission, le ou les processeurs de terminal étant exploitables pour faire imprimer des repères par la tête d'impression sur au moins une feuille, et pour faire tourner la première partie de corps montée de façon tournante afin d'amener l'organe racleur souple à interagir avec la tête d'impression à un instant où la tête d'impression n'est pas actionnée pour imprimer des repères.

15. Appareil selon la revendication 1 et comportant en outre :
au moins un processeur de terminal en liaison fonctionnelle avec la tête d'impression et la transmission, le ou les processeurs de terminal étant exploitables pour faire imprimer des repères par la tête d'impression sur au moins une feuille, et pour faire tourner la première partie de corps montée de façon tournante afin d'amener l'organe racleur souple à interagir avec la tête d'impression.

16. Appareil selon la revendication 14, le ou les processeurs de terminal étant en liaison fonctionnelle avec le capteur à balayage, et le ou les processeurs de terminal étant exploitables pour résoudre des données numériques correspondant à des repères figurant sur la ou les feuilles en réponse aux données correspondant à au moins une image.

17. Appareil selon la revendication 16, le ou les processeurs de terminal étant exploitables pour faire envoyer par la machine, à un ordinateur distant, des données correspondant à au moins une image.

18. Appareil selon la revendication 17, le ou les processeurs de terminal étant exploitables pour faire fonctionner le distributeur de billets en réponse à au moins une communication reçue par la machine en provenance d'un ordinateur distant.

19. Appareil selon la revendication 18 et comportant en outre :
une zone de stockage en liaison fonctionnelle avec le parcours de feuilles, au moins une feuille sur laquelle sont imprimés des repères via l'exploitation de la tête d'impression se déplaçant jusqu'à la zone de stockage.

20. Appareil selon la revendication 19 et comportant en outre :
un organe mobile pouvant être déplacé dans la zone de stockage ;
une transmission supplémentaire en liaison fonctionnelle avec l'organe mobile, l'organe mobile pouvant être déplacé en réponse à l'exploitation de la transmission supplémentaire ;
et la zone de stockage comportant une pluralité de sections de stockage, et la transmission supplémentaire étant en liaison fonctionnelle avec le ou les processeurs de terminal, et
l'organe ou les organes mobiles étant prévus pour se déplacer en réponse au(x) processeur(s) de terminal pour faire en sorte que des feuilles reçues dans la zone de stockage en provenance du parcours de feuilles soient sélectivement positionnées dans la pluralité de sections de stockage.

21. Appareil selon la revendication 1 et comportant en outre :
au moins un processeur de terminal ;
au moins un distributeur de billets ;
le ou les processeurs de terminal étant en liaison fonctionnelle avec la transmission, la tête d'impression et le distributeur de billets, et
le ou les processeurs de terminal étant exploitables pour faire imprimer des repères par la tête d'impression sur au moins une feuille présente dans le parcours de feuilles, faire en sorte que la transmission fasse tourner la première partie de corps afin d'amener l'organe racleur souple à interagir avec la tête d'impression, et pour faire fonctionner le distributeur de billets, des espèces étant ainsi distribuées à partir de la machine.

22. Appareil selon la revendication 21 et comportant en outre :
un capteur à balayage au voisinage de parcours de feuilles, le capteur à balayage étant exploitable pour produire des données correspondant à une image d'au moins une partie d'au moins une feuille.

23. Appareil selon la revendication 22, le capteur à balayage étant en liaison fonctionnelle avec le ou les processeurs de terminal, et le ou les processeurs de terminal étant exploitables pour faire envoyer par la machine, à au moins un ordinateur distant, des données correspondant à l'image.

24. Appareil selon la revendication 23, la au moins une feuille comportant un chèque.

25. Appareil selon la revendication 24, le ou les processeurs de terminal étant exploitables pour faire expulser de l'encre par la tête d'impression lorsqu'aucune feuille ne se trouve au voisinage de la tête d'impression dans le parcours de feuilles, puis faisant fonctionner la transmission pour faire tourner la première partie de corps dans une première direction et faire interagir l'organe racleur souple avec la tête d'impression, puis faisant en sorte que la transmission fasse tourner la première partie de corps plus loin dans la première direction jusqu'à ce que la première ouverture d'admission d'encre soit généralement alignée avec la tête d'impression.

26. Appareil selon la revendication 25, le collecteur d'encre comportant en outre un corps comprenant une zone de retenue d'encre et une partie saillante, la zone de retenue d'encre étant en liaison fluidique avec la partie saillante et la première partie de corps tournant autour de la partie saillante.
